# EUROPEAN PATENT APPLICATION

(11) **EP 4 483 769 A1**
(43) Date of publication of application: **01.01.2025**
(21) Application number: 23860641.2
(22) Date of filing: 03.07.2023
(51) Int. Cl.: A47L 9/28, A47L 5/24, H02J 7/00

(54) **CORDLESS VACUUM CLEANER, AND CONTROL METHOD THEREFOR**

(30) Priority: 02.09.2022 KR 20220111592; 20.01.2023 KR 20230009032
(71) Applicant: Samsung Electronics Co., Ltd, Suwon-si, Gyeonggi-do 16677 (KR)
(72) Inventor: LEE, Seongu, Suwon-si, Gyeonggi-do 16677 (KR); KIM, Daehyung, Suwon-si, Gyeonggi-do 16677 (KR); KIM, Minji, Suwon-si, Gyeonggi-do 16677 (KR); LEE, Ahyoung, Suwon-si, Gyeonggi-do 16677 (KR); JEONG, Jaeshik, Suwon-si, Gyeonggi-do 16677 (KR); CHO, Yoonkyung, Suwon-si, Gyeonggi-do 16677 (KR)
(74) Representative: Walaski, Jan Filip
(86) International application number: PCT/KR2023/009315
(87) International publication number: WO 2024/048958

(57) **Abstract**

Provided are a cordless vacuum cleaner and a control method therefor. The cordless vacuum cleaner comprising: a body; a brush device configured to configured to suck up the air and foreign materials of the surface to be cleaned by being pressed against the surface to be cleaned; and an extension pipe configured to connect the body and the brush device, wherein the brush device is rotatably combined with the extension pipe, wherein the body comprising: a suction motor configured to rotate a fan to suck up dust; at least one battery which supplies power to the suction motor; and a processor; wherein the at least one battery from among different types of batteries is detachably connected to the body, and wherein the processor is configured to: identify a type of the at least one battery; and control an output of the suction motor, based on the type.

## Description

### [Technical Field]

An embodiment of the disclosure relate to a cordless vacuum cleaner and a control method therefor.

### [Background Art]

A corded vacuum cleaner may perform a suction function by connecting a power plug to a power socket during operation. On the other hand, a cordless vacuum cleaner may be charged by electric energy while on standby, and perform a suction function by using the charged electric energy during operation. Accordingly, movement of the corded vacuum cleaner may be restricted due to a power cord connecting the power plug and a cleaner body to each other because the power plug needs to be connected to the power socket when the corded vacuum cleaner is being used by a user, whereas movement of the cordless vacuum cleaner may not be restricted by a power cord while being used because the power plug is not required to be connected to the power socket when the cordless vacuum cleaner is being used.

The cordless vacuum cleaner may include a battery storing the charged electric energy. The battery may be provided at a designated portion of a cleaner body. When the capacity of the battery is increased, use time and suction performance of the cordless vacuum cleaner may be increased. Accordingly, it may be advantageous to use a performance type battery in which the capacity is increased, in terms of the use time and suction performance. On the other hand, a weight of the battery may be decreased when the capacity of the battery is decreased. Accordingly, it may be advantageous to use a lightweight type battery for reducing the capacity, in terms of user convenience. When using the cordless vacuum cleaner, a discharge trend of the battery may change according to the capacity of the battery. The cordless vacuum cleaner requires the battery because it is used cordlessly, and it is important that the mounted battery may be used for a long time and safely.

### [Disclosure]

### [Technical Solution]

A cordless vacuum cleaner in an embodiment of the disclosure may include a body, a brush device configured to suck up the air and foreign materials of the surface to be cleaned by being pressed against the surface to be cleaned, and an extension pipe configured to connect the body and the brush device, wherein the brush device is rotatably combined with the extension pipe. The body in an embodiment of the disclosure may include a suction motor configured to rotate a fan to suck up dust, at least one battery supplying power to the suction motor, and at least one processor. The at least one processor in an embodiment of the disclosure may be configured to identify a type of the at least one battery. The at least one processor in an embodiment of the disclosure may be configured to control an output of the suction motor, based on the type.

A cordless vacuum cleaner in an embodiment of the disclosure may include a body. The body in an embodiment of the disclosure may include a suction motor configured to rotate a fan to suck up dust and at least one processor. The at least one processor in an embodiment of the disclosure may be configured to identify a type of the at least one battery. The at least one processor in an embodiment of the disclosure may be configured to control an output of the suction motor, based on the type.

A control method for a cordless vacuum cleaner, according to the disclosure, may include identifying a type of at least one battery of the cordless vacuum cleaner. The control method for the cordless vacuum cleaner, according to the disclosure, may include controlling an output of a suction motor of the cordless vacuum cleaner, based on the type.

### [Description of Drawings]

FIGS. 1A to 1C are diagrams of an embodiment of a cordless vacuum cleaner according to the disclosure.
FIG. 2 is a diagram of a body and a station of a cordless vacuum cleaner, according to an embodiment of the disclosure.
FIG. 3 is a diagram of a body of a cordless vacuum cleaner, according to an embodiment of the disclosure.
FIG. 4 is a block diagram of a cordless vacuum cleaner, according to an embodiment of the disclosure.
FIG. 5 is a block diagram for describing controlling of at least one battery of a cordless vacuum cleaner, according to an embodiment of the disclosure.
FIG. 6 is a circuit diagram of a battery circuit of a cordless vacuum cleaner, according to an embodiment of the disclosure.
FIG. 7 is a diagram for describing structures and functions of components of a body of a cordless vacuum cleaner, according to an embodiment of the disclosure.
FIG. 8 is a block diagram of a battery coupling portion and a terminal accommodating portion of at least one battery of a cordless vacuum cleaner, according to an embodiment of the disclosure.
FIG. 9 is a diagram of a battery coupling portion of a cordless vacuum cleaner, according to an embodiment of the disclosure.
FIG. 10 is a diagram showing a terminal accommodating portion of at least one battery being coupled to a battery coupling portion of a cordless vacuum cleaner, according to an embodiment of the disclosure.
FIG. 11 is a diagram showing a terminal accommodating portion of at least one battery being coupled to a battery coupling portion of a cordless vacuum cleaner, according to an embodiment of the disclosure.
FIG. 12 is a flowchart of a control method for a cordless vacuum cleaner, according to an embodiment of the disclosure.
FIG. 13 is a flowchart of a method of controlling an output of a suction motor according to an operating mode of a cordless vacuum cleaner, according to an embodiment of the disclosure.
FIG. 14 is a table showing a result of controlling an output of a suction motor according to an operating mode of a cordless vacuum cleaner, according to an embodiment of the disclosure.
FIG. 15 is a table showing a result of controlling an output of a suction motor according to an operating mode of a cordless vacuum cleaner, according to an embodiment of the disclosure.
FIG. 16 is a table showing a result of controlling at least one of a fully-charged voltage or a final discharge voltage of a battery, according to an operating mode of a cordless vacuum cleaner, according to an embodiment of the disclosure.
FIG. 17 is a table showing a result of controlling an output of a suction motor according to temperature information of a battery of a cordless vacuum cleaner, according to an embodiment of the disclosure.
FIG. 18 is a table showing a result of controlling at least one of a fully-charged voltage or a final discharge voltage of a battery, according to a use cycle of a cordless vacuum cleaner, according to an embodiment of the disclosure.

### [Mode for Invention]

The terms used in the disclosure will be briefly defined, and an embodiment of the disclosure will be described in detail.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of an embodiment of the disclosure. Thus, the terms used herein have to be defined based on the meaning of the terms together with the description throughout the specification.

When a part "includes" or "comprises" an element, unless there is a particular description contrary thereto, the part may further include other elements, not excluding the other elements. In addition, terms such as "unit" and "module" described in the disclosure denote a unit that processes at least one function or operation, which may be implemented in hardware or software, or implemented in a combination of hardware and software.

Throughout the disclosure, the expression "at least one of a, b or c" indicates only a, only b, only c, both a and b, both a and c, both b and c, all of a, b, and c, or variations thereof.

Hereinafter, an embodiment of the disclosure will be described in detail with reference to the accompanying drawings such that one of ordinary skill in the art may easily implement the embodiment of the disclosure. However, the disclosure may be implemented in various different forms and is not limited to an embodiment of the disclosure described herein. Also, in the drawings, parts irrelevant to the description are omitted in order to clearly describe an embodiment of the disclosure, and like reference numerals designate like elements throughout the specification.

According to an embodiment of the disclosure, provided are a cordless vacuum cleaner and a control method therefor, wherein at least one battery from among batteries having different capacities may be coupled to the cordless vacuum cleaner, and an operation is controlled according to a discharge trend of the coupled at least one battery.

According to an embodiment of the disclosure, provided are a cordless vacuum cleaner and a control method therefor, wherein a voltage of a battery is controlled based on a type of the battery and a state information of the battery, and at least one of a life of the battery or a use time of the battery is increased.

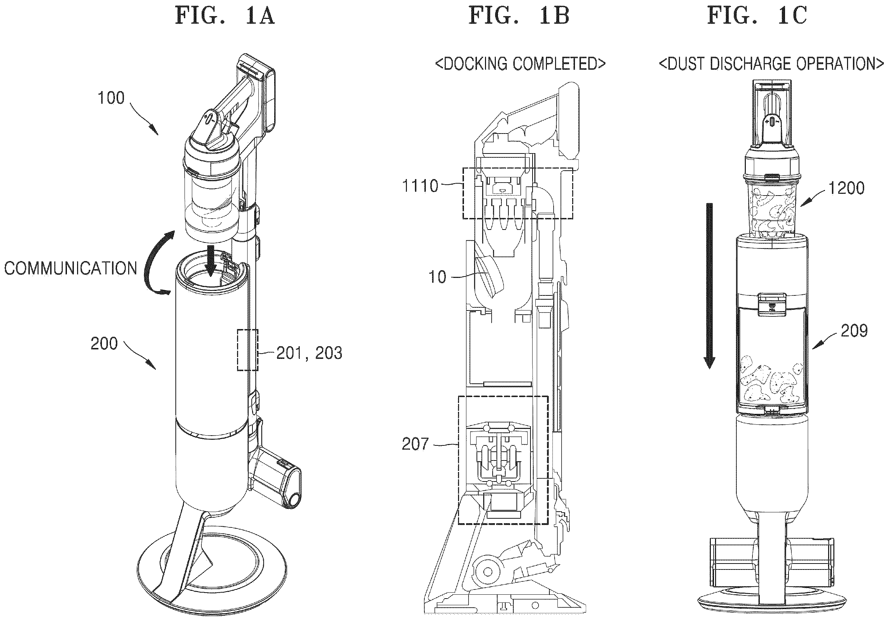

FIGS. 1A to 1C are diagrams of an embodiment of a cordless vacuum cleaner 100 according to the disclosure. The cordless vacuum cleaner 100 in an embodiment of the disclosure may include a body and a station 200.

In an embodiment of the disclosure, the cordless vacuum cleaner 100 may denote a vacuum cleaner, and a power cord to be connected to an outlet during cleaning is not desired for the cordless vacuum cleaner 100. The cordless vacuum cleaner 100 may include at least one chargeable battery.

In an embodiment of the disclosure, the body of the cordless vacuum cleaner 100 may be moved over a surface to be cleaned, by a user. The body of the cordless vacuum cleaner 100 may include a handle that may be grabbed by the user. The body of the cordless vacuum cleaner 100 may suck up (or absorb) dust or foreign materials (e.g., dust, hair, and trash) from the surface to be cleaned while moving. The cordless vacuum cleaner 100 may include a suction motor 1110 forming a vacuum inside the body. Hereinafter, for convenience of description, the suction motor 1110 of the cordless vacuum cleaner 100 may also be referred to as a first suction motor 1110.

In an embodiment of the disclosure, the body of the cordless vacuum cleaner 100 may suck up dust or foreign materials from the surface to be cleaned through a brush device. The body of the cordless vacuum cleaner 100 may include the brush device (cleaner head) forming a suction structure for easily sucking up the dust or foreign materials from the surface to be cleaned. The body of the cordless vacuum cleaner 100 may include a dust container (also referred to as a dust collecting container) 1200 for collecting the sucked up dust or foreign materials.

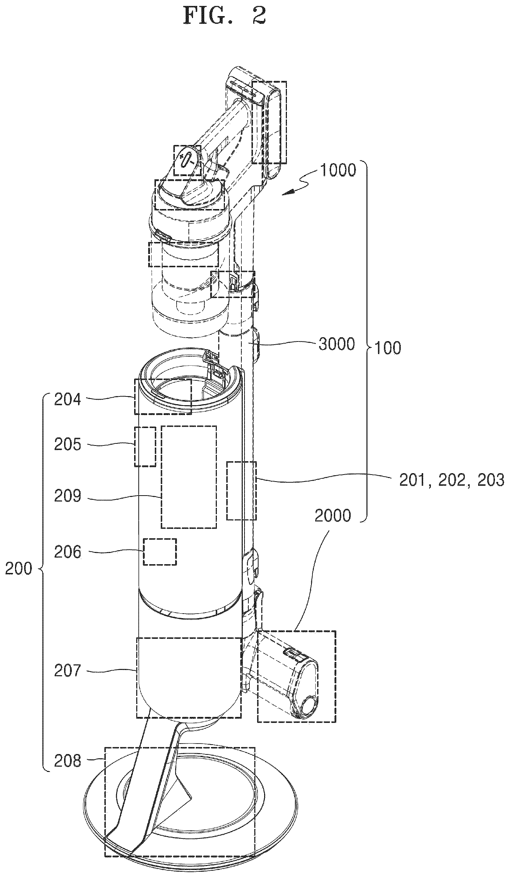

In an embodiment of the disclosure, the body of the cordless vacuum cleaner 100 may include a communication interface for communicating with the station 200. In an embodiment, the body of the cordless vacuum cleaner 100 may transmit/receive data to/from the station 200 through a short-range wireless network (e.g., a wireless personal area network (WPAN) or Bluetooth^{™} low energy (BLE), for example. A configuration of the body of the cordless vacuum cleaner 100 will be described in detail below with reference to FIGS. 2 through 4 and 7.

In an embodiment of the disclosure, the station 200 may include a support where the cordless vacuum cleaner 100 may be docked. The station 200 may discharge the dust or foreign materials sucked up by the body of the cordless vacuum cleaner 100. In an embodiment, the station 200 may also be referred to as a cleaning station, for example. The station 200 may charge at least one battery included in the body of the cordless vacuum cleaner 100. The station 200 may store the body of the cordless vacuum cleaner 100.

In an embodiment of the disclosure, the station 200 may communicate with the body of the cordless vacuum cleaner 100 or a server device through a network. In an embodiment, the station 200 may transmit/receive data to/from the body of the cordless vacuum cleaner 100 through the short-range wireless network (e.g., WPAN or BLE) that does not pass through an access point (AP), for example. In an embodiment, the station 200 may transmit/receive data to/from the server device through an AP that connects a local area network (LAN) to which the station 200 is connected to a wide area network (WAN) to which the server device is connected, for example. In an embodiment, the station 200 may be connected to the cordless vacuum cleaner 100 through BLE communication and connected to the server device through Wi-Fi^{™} communication (IEEE 802.11), for example.

In an embodiment of the disclosure, the station 200 may include a communication interface 201, a station processor 203, a suction motor (also referred to as a second suction motor) 207, and a collecting portion 209. The second suction motor 207 may generate suction power for discharging dust or foreign materials collected in the dust container 1200 of the body of the cordless vacuum cleaner 100 from the body of the cordless vacuum cleaner 100. In an embodiment, the second suction motor 207 may generate a pressure difference inside the dust container 1200 to generate the suction power, for example. When the station 200 is erected, the second suction motor 207 may be disposed lower than the collecting portion 209.

In an embodiment of the disclosure, as shown in a situation of FIG. 1A, the body of the cordless vacuum cleaner 100 may be docked to the station 200. When a distance between the body of the cordless vacuum cleaner 100 and the station 200 is decreased, the body of the cordless vacuum cleaner 100 and the station 200 may establish a short-range wireless communication channel and transmit/receive data.

In an embodiment of the disclosure, as shown in a situation of FIG. 1B, the docking of the body of the cordless vacuum cleaner 100 to the station 200 may be completed. Here, a cover 10 of the dust container 1200 included in the body of the cordless vacuum cleaner 100 may be opened. The cover 10 of the dust container 1200 may be automatically opened or may be manually opened by a user input.

In an embodiment of the disclosure, as shown in a situation of FIG. 1C, the station 200 may perform a dust discharge operation of discharging the dust of the dust container 1200 to the collecting portion 209 after the cover 10 of the dust container 1200 is opened. In an embodiment, the collecting portion 209 may include a replaceable dust bag, for example.

In an embodiment of the disclosure, at least one battery for driving the suction motor 1110 may be disposed (e.g., mounted) on the body of the cordless vacuum cleaner 100. The at least one battery may be disposed (e.g., mounted) on any location of the body of the cordless vacuum cleaner 100. In an embodiment, the at least one battery may be disposed (e.g., mounted) on a handle portion of the body of the cordless vacuum cleaner 100, according to weight distribution of the body of the cordless vacuum cleaner 100, for example.

In an embodiment of the disclosure, the at least one battery may be attached to and detached from the body of the cordless vacuum cleaner 100. When the at least one battery is attachable to and detachable from the body of the cordless vacuum cleaner 100, a suction operation of the cordless vacuum cleaner 100 may be continued by replacing the at least one battery with another battery when the at least one battery is all consumed according to the suction operation of the cordless vacuum cleaner 100.

The cordless vacuum cleaner 100 in an embodiment of the disclosure may identify a type of an attached battery when types of the at least one battery is different from each other. The cordless vacuum cleaner 100 in an embodiment of the disclosure may control an output of the suction motor 1110 by controlling power output from a battery to correspond to the type of the at least one battery. The cordless vacuum cleaner 100 in an embodiment of the disclosure may efficiently manage a battery by controlling at least one of a fully-charged voltage or a final discharge voltage of the at least one battery to correspond to the type of the at least one battery and a state of the at least one battery.

Hereinafter, components configuring a body 1000 and the station 200 included in the cordless vacuum cleaner 100 will be described with reference to FIG. 2.

FIG. 2 is a diagram of an embodiment of the body 1000 and the station 200 of the cordless vacuum cleaner 100, according to the disclosure.

In an embodiment of the disclosure, the station 200 may include the communication interface 201, a memory 202, the station processor 203, a user interface 204, a wired connector 205, a pressure sensor (hereinafter, also referred to as a second pressure sensor) 206, the suction motor (also referred to as a second suction motor) 207, a power supply device 208, a dust collecting container coupling portion, the collecting portion 209, and a filter portion. However, not all of the components shown in FIG. 2 are essential components. The station 200 may be implemented by more components than those shown in FIG. 2 or by fewer components than those shown in FIG. 2. Each component will now be described below.

In an embodiment of the disclosure, the communication interface 201 may perform communication with an external device. In an embodiment, the station 200 may perform communication with the body 1000 or a server device through the communication interface 201, for example. Here, the communication interface 201 may communicate with the server device through a first communication method (e.g., a Wi-Fi^{™} communication method) and communicate with the body 1000 through a second communication method (e.g., a BLE communication method). The communication interface 201 may include a short-range wireless communication interface and a long-range wireless communication interface. The short-range wireless communication interface may be used to communicate with the body 1000 docked to the station 200. In an embodiment, the short-range wireless communication interface may include a Bluetooth^{™} communication interface, a BLE communication interface, a near field communication (NFC) interface, a wireless local area network (WLAN) (e.g., Wi-Fi^{™}) communication interface, a Zigbee communication interface, an infrared data association (IrDA) communication interface, a Wi-Fi^{™} direct (WFD) communication interface, an ultra-wideband (UWB) communication interface, or an Ant+ communication interface, for example. The long-range wireless communication interface may be used by the station 200 to remotely communicate with the server device. In an embodiment, the long-range wireless communication interface may include the Internet, a computer network (e.g., LAN or WAN), or a mobile communication interface, for example. The mobile communication interface may include a 3rd generation (3G) module, a 4th generation (4G) module, a 5th generation (5G) module, a long-tern evolution (LTE) module, a node B (NB)-Internet of things (IoT) module, or an LTE-machine type communication (LTE-M) module. The communication interface 201 may transmit data to the station processor 203 through a universal synchronous receiver/transmitter (UART).

In an embodiment of the disclosure, the memory 202 may store a program (e.g., one or more instructions) for processing and control by the station processor 203. The memory 202 may store pieces of data input/output to/from the station 200. In an embodiment, the memory 202 may store software related to control by the station 200, state data of the suction motor 207, a measurement value of the pressure sensor 206, and information about an operating mode for dust discharge (e.g., an operating time of the suction motor 207 for each operating mode and a suction power generation pattern for each operating mode), for example. In an embodiment, the memory 202 may store data received from the body 1000, for example. In an embodiment, the memory 202 may store product information (e.g., identification information and model information) of the body 1000 docked to the station 200, information about a software version installed in the body 1000, and error occurrence data (malfunction history data) of the body 1000, for example.

In an embodiment of the disclosure, the memory 202 may include at least one type of storage medium among a flash memory type, a hard disk type, a multimedia card micro type, a card type memory (e.g., a secure digital (SD) or an extreme digital (XD) memory), a random-access memory (RAM), a static RAM (SRAM), a read-only memory (ROM), an electrically erasable programmable ROM (EEPROM), a programmable ROM (PROM), a magnetic memory, a magnetic disk, and an optical disk. Programs stored in the memory 202 may be classified into a plurality of modules depending on functions.

In an embodiment of the disclosure, the station processor 203 may control all operations of the station 200. In an embodiment, upon detecting occurrence of an event that desires dust discharge of the dust container 1200, the station processor 203 may control the communication interface 201 to transmit, to the body 1000, a control signal for driving the first suction motor 1110 of the body 1000 to discharge dust, for example. Also, the station processor 203 may also drive the second suction motor 207 while driving the first suction motor 1110, so as to perform the dust discharge operation of discharging dust of the dust container 1200 to the collecting portion 209.

In an embodiment of the disclosure, the station processor 203 may include at least one of a central processing unit (CPU), a graphics processing unit (GPU), an accelerated processing unit (APU), a many integrated core (MIC), a digital signal processor (DSP), or a neural processing unit (NPU). The station processor 203 may be implemented in the form of an integrated system-on-chip (SoC) including one or more electronic components. In an embodiment, the station processor 203 may be implemented as individual hardware, for example. In an embodiment, the station processor 203 may be also referred to as a micro-computer, microprocessor computer, or microprocessor controller (MICOM), a micro processor unit (MPU), or a micro controller unit (MCU), for example. In an embodiment, the station processor 203 may be implemented as a single core processor or a multicore processor, for example.

In an embodiment of the disclosure, the user interface 204 may include an input unit receiving a user input and an output unit notifying the user of a state of the cordless vacuum cleaner 100. In an embodiment, the input unit may include a discharge start button, a discharge end button, and a mode selecting button, for example. In an embodiment, the output unit may include a display, such as a light-emitting diode (LED), a liquid crystal display (LCD), or a touchscreen, and a sound output unit, such as a speaker, for example. In an embodiment, the display may display a battery charge amount of the body 1000 or software update progress information, for example. In an embodiment, the sound output unit may output, in voice, an important instruction or warning about a battery, for example.

In an embodiment of the disclosure, the wired connector 205 may include a terminal for connecting a computing device of a system manager (e.g., a service engineer). The system manager may connect the computing device storing a new version of software to the wired connector 205, and transfer the new version of software to the memory 202 of the station 200. Here, when the new version of software is software related to control by the station 200, pre-installed software of the station 200 may be updated. When the new version of software is software related to control by the cordless vacuum cleaner 100, the station 200 may transfer the new version of software to the cordless vacuum cleaner 100 depending on whether a pre-set condition is satisfied. In an embodiment, when the cordless vacuum cleaner 100 is docked to the station 200 and the station 200 is able to perform BLE communication with the cordless vacuum cleaner 100, the station 200 may transfer the new version of software to the cordless vacuum cleaner 100. Here, the cordless vacuum cleaner 100 may update pre-installed software, for example.

In an embodiment of the disclosure, the pressure sensor (second pressure sensor) 206 may measure pressure inside the station 200. The pressure sensor 206 may measure a pressure value before dust discharge and a pressure value after dust discharge. The pressure sensor 206 may transmit the measured pressure value to the station processor 203 through inter-integrated circuit (I2C) communication. In an embodiment, the pressure sensor 206 may be provided between the collecting portion 209 and the suction motor 207, for example. When the pressure sensor 206 is provided between the collecting portion 209 and the suction motor 207, the pressure sensor 206 is disposed at a rear end of the suction motor 207, and thus the pressure sensor 206 may be implemented as a positive pressure sensor.

In an embodiment of the disclosure, the suction motor (second suction motor) 207 may generate suction power for discharging foreign materials collected in the dust container 1200 of the body 1000 from the body 1000. The suction motor 207 may rotate a suction fan moving the air. In the disclosure, the suction fan may include a component configured to generate suction power. In an embodiment, the suction fan may include an impeller, for example. The inside of the station 200 becomes a vacuum state according to rotation of the impeller, and the collecting portion 209 of the station 200 may suck up foreign materials collected in the dust container 1200. Here, the vacuum state denotes pressure lower than the atmospheric pressure. In an embodiment of the disclosure, the power supply device 208 may receive alternating current power from a power source and convert the same into direct current power. In an embodiment, the power supply device 208 may include a switching mode power supply (SMPS). When the body 1000 is docked to the station 200, the direct current power obtained by the power supply device 208 is supplied to the battery of the body 1000 through a charging terminal, thereby charging the battery of the body 1000, for example.

In an embodiment of the disclosure, the dust collecting container coupling portion may be provided such that the dust collecting container (dust container) 1200 of the body 1000 is docked thereto. When the dust container 1200 is disposed (e.g., mounted) on the dust collecting container coupling portion, docking of the body 1000 and the station 200 may be completed. A docking detecting sensor for detecting docking of the body 1000 may be included in the dust collecting container coupling portion. In an embodiment, the docking detecting sensor may be a tunnel magneto-resistance (TMR) sensor, for example. The TMR sensor may sense whether the body 1000 is docked by detecting a magnetic body attached to the dust container 1200. In an embodiment, the station 200 may include a step motor (also referred to as a first step motor) for pressing one side of the cover (also referred to as a door) 10 of the dust container 1200 such that the cover 10 is opened when the dust container 1200 is docked to the station 200, for example. In an embodiment, the station 200 may further include a step motor (also referred to as a second step motor) for pressing one side of the cover 10 of the dust container 1200 such that the cover 10 is closed after dust discharge is completed, for example.

In an embodiment of the disclosure, the collecting portion 209 is a space where foreign materials discharged from the dust container 1200 of the body 1000 may be collected. The collecting portion 209 may include a dust bag where the foreign materials discharged from the dust container 1200 are collected. The dust bag may include a material through which the air is penetrated but the foreign materials are not penetrated, such that the foreign materials introduced from the dust container 1200 to the collecting portion 209 are collected. The dust bag may be provided to be detachable from the collecting portion 209. In an embodiment, the station 200 may include an ultraviolet irradiator that irradiates ultraviolet rays to the collecting portion 209, for example. The ultraviolet irradiator may include a plurality of ultraviolet lamps. The ultraviolet irradiator may suppress proliferation of germs in the collecting portion 209 including the dust bag. In an embodiment, the ultraviolet irradiator may suppress proliferation of germs from dust in the dust bag, for example.

In an embodiment of the disclosure, the filter portion may filter out fine particulate matters that are not collected in the collecting portion 209. The filter portion may include a discharge port for discharging the air that passed through a filter to the outside of the station 200. In an embodiment, the filter portion may include a motor filter or a high-efficiency particulate air (HEPA) filter, for example.

In an embodiment of the disclosure, the cordless vacuum cleaner 100 may be a stick type vacuum cleaner including the body 1000, a brush device 2000, and an extension pipe 3000. However, not all of the components shown in FIG. 2 are essential components. The cordless vacuum cleaner 100 may be implemented by more components than those shown in FIG. 2 or by fewer components than those shown in FIG. 2. In an embodiment, the cordless vacuum cleaner 100 may include the body 1000 and the brush device 2000 without the extension pipe 3000, for example.

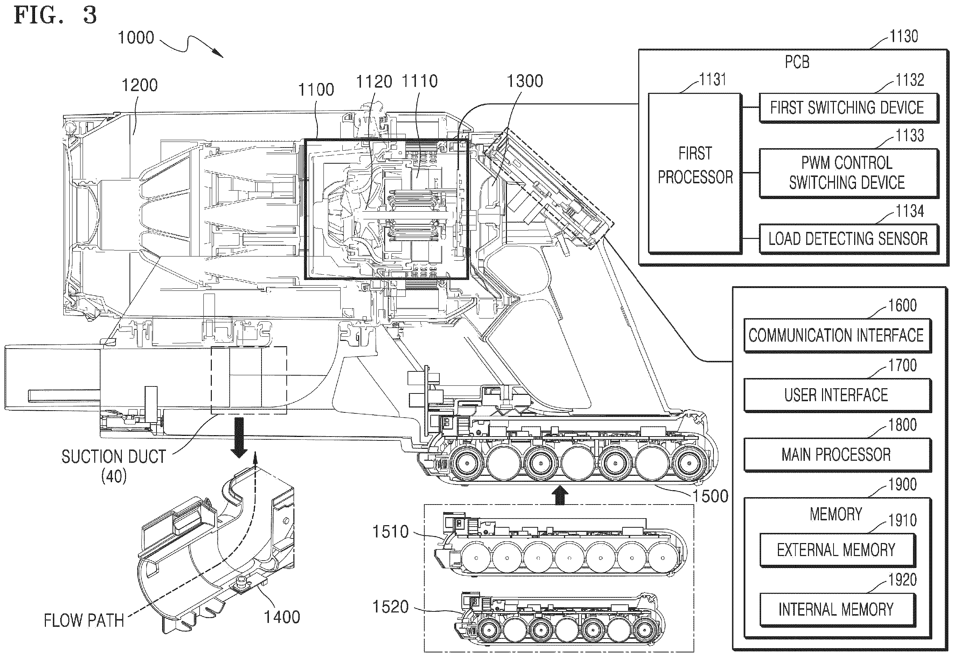

In an embodiment of the disclosure, the body 1000 may be a portion where the user may hold and move during cleaning. The body 1000 may include the suction motor (first suction motor) 1110 forming vacuum therein. The suction motor 1110 may be disposed inside the dust container 1200 where foreign materials sucked up from the surface to be cleaned (e.g., a floor, bedding, or a sofa) are accommodated. The body 1000 may further include, in addition to the suction motor 1110, at least one processor, a battery, and a memory storing software related to control by the cordless vacuum cleaner 100, but is not limited thereto. The body 1000 will be described in detail below with reference to FIG. 3.

In an embodiment of the disclosure, the brush device 2000 is a device configured to suck up the air and foreign materials of the surface to be cleaned by being pressed against the surface to be cleaned. The brush device 2000 may also be referred to as a cleaner head. The brush device 2000 may be rotatably combined with the extension pipe 3000. In an embodiment, the brush device 2000 may include a motor and a drum to which a rotating brush is attached, for example. In an embodiment, the brush device 2000 may include at least one processor configured to control communication with the body 1000, for example. The body 1000 and the brush device 2000 may communicate with each other through I2C communication or UART communication.

In an embodiment of the disclosure, the extension pipe 3000 may be formed as a pipe having predetermined rigidity or a flexible hose. The extension pipe 3000 may transmit suction power generated through the suction motor 1110 of the body 1000 to the brush device 2000, and transfer the air and foreign materials sucked up through the brush device 2000 to the body 1000. The extension pipe 3000 may be detachably connected to the brush device 2000. The extension pipe 3000 may be formed in multiple stages between the body 1000 and the brush device 2000, or may be formed as at least one passage.

In an embodiment of the disclosure, at least one battery from among different types of batteries may be detachably coupled to the body 1000. The different types of batteries may have different capacities. The cordless vacuum cleaner 100 in an embodiment of the disclosure may identify a type of the at least one battery detachably coupled to the body 1000. The cordless vacuum cleaner 100 in an embodiment of the disclosure may control an output of the suction motor 1110 according to the type of the at least one battery. The cordless vacuum cleaner 100 in an embodiment of the disclosure may control at least one of the fully-charged voltage or the final discharge voltage of the at least one battery according to the type of the at least one battery and the state of the at least one battery. In an embodiment, the cordless vacuum cleaner 100 may control at least one of the fully-charged voltage or the final discharge voltage of the at least one battery according to an operating mode of the cordless vacuum cleaner 100, abnormality of the at least one battery, and a usage cycle of the at least one battery, for example.

Hereinafter, a configuration of the body 1000 will be described with reference to FIG. 3.

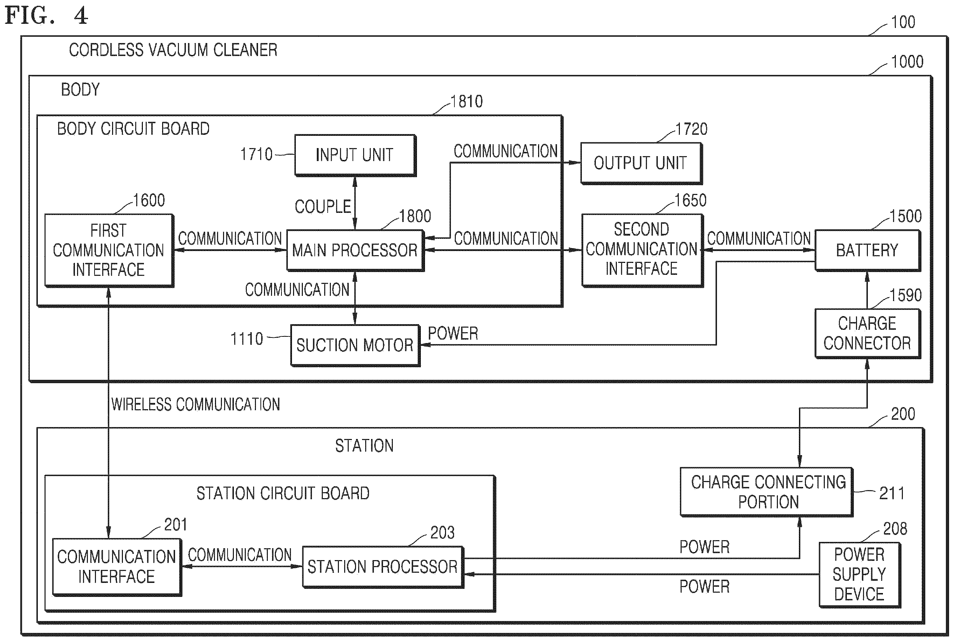

FIG. 3 is a diagram of an embodiment of the body 1000 of the cordless vacuum cleaner 100, according to the disclosure. The body 1000 in an embodiment of the disclosure may include a motor assembly 1100, the dust collecting container (also referred to as a dust container) 1200, a filter portion 1300, a pressure sensor 1400, a battery 1500 supplying power to the motor assembly 1100, a communication interface (may also be referred to as a first communication interface in FIG. 4 and below) 1600, a user interface 1700, at least one processor (e.g., including a main processor 1800), and a memory 1900.

In an embodiment of the disclosure, the motor assembly 1100 may generate suction power desired to suck up foreign materials on a surface to be cleaned. The motor assembly 1100 may be disposed in the dust collecting container 1200. The motor assembly 1100 may include the suction motor 1110 configured to switch electric force to mechanical rotating force, a fan 1120 rotating by being connected to the suction motor 1110, and a printed circuit board (PCB) 1130 connected to the suction motor 1110.

In an embodiment of the disclosure, the suction motor 1110 may form, inside the cordless vacuum cleaner 100, pressure lower than the atmospheric pressure. In an embodiment, the suction motor 1110 may form a vacuum state inside the cordless vacuum cleaner 100, for example. In an embodiment, the suction motor 1110 may include a brushless direct current (BLDC) motor, for example.

In an embodiment of the disclosure, the PCB 1130 may control the suction motor 1110. In an embodiment, the PCB 1130 may include a processor (hereinafter, a first processor 1131) configured to control communication with the brush device 2000, a first switching device 1132 connected to a signal line, a switching device (hereinafter, a pulse width modulation (PWM) control switching device 1133) (e.g., a field-effect transistor (FET), a transistor, or an insulated gate bipolar transistor (IGBT)) configured to control power supply to the brush device 2000, and a load detecting sensor 1134 (e.g., a shunt resistor, a shunt resistor and an amplification circuit (operational amplifier (OP-AMP)), a current detecting sensor, or a magnetic field detecting sensor (non-contact manner)) configured to detect a load of the brush device 2000. Hereinafter, for convenience of descriptions, an FET may be described as an embodiment of the PWM control switching device 1133, and a shunt resistor may be described as an embodiment of the load detecting sensor 1134, for example.

In an embodiment of the disclosure, the first processor 1131 may obtain data (hereinafter, also referred to as state data) related to a state of the suction motor 1110. The first processor 1131 may transmit the state data of the suction motor 1110 to the main processor 1800. The first processor 1131 may transmit a signal (hereinafter, a first signal) to the brush device 2000 through the signal line by controlling (e.g., turning on or off) an operation of the first switching device 1132 connected to the signal line. The first switching device 1132 is a device that enables a state of the signal line to become low. In an embodiment, the first switching device 1132 is a device that enables a voltage of the signal line to be 0 volt (V), for example. In an embodiment, the first signal may include data indicating at least one of target revolutions per minute (RPM) of a rotating brush of the brush device 2000 (hereinafter, also referred to as a target drum RPM), a target trip level of the brush device 2000, or power consumption of the suction motor 1110, for example. In an embodiment, the first signal may include data for controlling a lighting device included in the brush device 2000. The first signal may be realized in a pre-set number of bits, for example. In an embodiment, the first signal may be realized in 5 bits or in 8 bits, for example. The first signal may be transmitted every pre-set transmission cycle. In an embodiment, the first signal may have a transmission cycle of 10 milliseconds (ms) per bit, for example.

In an embodiment of the disclosure, the first processor 1131 may detect a signal (hereinafter, a second signal) transmitted from the brush device 2000 through the signal line. In an embodiment, the second signal may include data indicating a current state of the brush device 2000, for example. In an embodiment, the second signal may include data related to a condition being currently operated (e.g., current drum RPM, a current trip level, or a current lighting device setting value), for example. In an embodiment, the second signal may further include data indicating a type of the brush device 2000, for example. The first processor 1131 may transmit, to the main processor 1800, the data indicating the current state of the brush device 2000 or the data indicating the type of the brush device 2000, included in the second signal.

In an embodiment of the disclosure, the dust collecting container 1200 may accommodate the foreign materials sucked up from the surface to be cleaned. The dust collecting container 1200 may be configured to filter out dust or dirt in the air introduced through the brush device 2000, and collect the same. The dust collecting container 1200 may be provided to be attached to or detached from the body 1000.

In an embodiment of the disclosure, the dust collecting container 1200 may collect and store foreign materials included in the air that is externally discharged. The dust collecting container 1200 may collect the foreign materials through a cyclone method of separating the foreign materials by centrifugal force. The air from which the foreign materials are removed through the cyclone method may be discharged to the outside of the body 1000. In an embodiment, a multi-cyclone may be arranged inside the dust collecting container 1200, for example. The dust collecting container 1200 may be provided such that the foreign materials are collected below the multi-cyclone.

In an embodiment of the disclosure, the dust collecting container 1200 may include a dust collecting container door (also referred to as the cover 10 of the dust container 1200) provided such that the dust collecting container 1200 is opened when connected to the station 200. The dust collecting container 1200 may include a first dust collecting portion where relatively large foreign materials collected primarily are collected, and a second dust collecting portion where relatively small foreign materials collected by the multi-cyclone are collected. The first dust collecting portion and the second dust collecting portion may both be provided to be externally opened when the dust collecting container door is opened.

In an embodiment of the disclosure, the filter portion 1300 may filter out fine particulate matters that are not filtered out by the dust collecting container 1200. The filter portion 1300 may include the discharge port for discharging the air that passed through a filter to the outside of the cordless vacuum cleaner 100. In an embodiment, the filter portion 1300 may include a motor filter or an HEPA filter, for example.

In an embodiment of the disclosure, the pressure sensor 1400 may measure pressure inside a flow path (hereinafter, also referred to as flow path pressure). The pressure sensor 1400 provided at a suction end (e.g., a suction duct 40) may measure a flow rate change at a corresponding location by measuring static pressure. The pressure sensor 1400 may be an absolute pressure sensor or a relative pressure sensor.

In an embodiment of the disclosure, when the pressure sensor 1400 is an absolute pressure sensor, the main processor 1800 may sense a first pressure value before the suction motor 1110 is operated, by the pressure sensor 1400. The main processor 1800 may sense a second pressure value after the suction motor 1110 is operated at a target RPM. The main processor 1800 may obtain, as a pressure value inside the flow path, a difference value between the first pressure value and the second pressure value. The first pressure value may be a pressure value according to internal/external effects, such as weather, altitude, a state of the cordless vacuum cleaner 100, and an amount of introduced dust. The second pressure value may be a pressure value according to driving of the suction motor 1110 and according to internal/external effects, such as altitude, a state of the cordless vacuum cleaner 100, and an amount of introduced dust. The difference value between the first pressure value and the second pressure value may be a pressure value according to the driving of the suction motor 1110. Accordingly, when the difference value between the first pressure value and the second pressure value is used as the pressure value inside the flow path, the internal/external effects other than the suction motor 1110 may be reduced. In an embodiment, the flow path pressure measured by the pressure sensor 1400 may be used to identify a current usage environment state of the brush device 2000 (e.g., a state (a hard floor, a carpet, a mat, or a corner) of a surface to be cleaned or a state of being lifted from a surface to be cleaned), for example. In an embodiment, the flow path pressure measured by the pressure sensor 1400 may be used to measure suction power that changes according to a contamination degree or a dust collected degree of the dust collecting container 1200, for example.

In an embodiment of the disclosure, the pressure sensor 1400 may be disposed at the suction end (e.g., the suction duct 40). The suction duct 40 may be a structure that connects the dust collecting container 1200 and the extension pipe 3000 to each other or the dust collecting container 1200 and the brush device 2000 to each other such that a fluid including the foreign materials may move to the dust collecting container 1200. In an embodiment, considering contamination of dirt/dust, the pressure sensor 1400 may be disposed at an end of a straight portion (or an inflection point of the straight portion and a curved portion) of the suction duct 40, for example. In an embodiment, the pressure sensor 1400 may be disposed at a center of the straight portion of the suction duct 40, for example. When the pressure sensor 1400 is disposed at the suction duct 40, the pressure sensor 1400 is disposed at a front end of the suction motor 1110 that generates suction power, and thus the pressure sensor 1400 may be implemented as a negative pressure sensor.

In the disclosure, the pressure sensor 1400 is disposed at the suction duct 40, but an embodiment of the disclosure is not limited thereto. The pressure sensor 1400 may be disposed at a discharge end (e.g., inside the motor assembly 1100). When the pressure sensor 1400 is disposed at the discharge end, the pressure sensor 1400 is disposed at a rear end of the suction motor 1110, and thus the pressure sensor 1400 may be implemented as a positive pressure sensor. Also, a plurality of the pressure sensors 1400 may be provided in the cordless vacuum cleaner 100.

In an embodiment of the disclosure, the at least one battery 1500 may be detachably disposed (e.g., mounted) on the body 1000. The at least one battery 1500 may be electrically connected to a charging terminal provided at the station 200. The at least one battery 1500 may be charged by receiving power from the charging terminal. The at least one battery 1500 may be any one of various types of batteries. In an embodiment, the at least one battery 1500 may have a unique identification (ID) depending on a type, for example. In an embodiment, the at least one battery 1500 may be at least one of a first battery 1510 or a second battery 1520 having different capacities from each other, for example.

In an embodiment of the disclosure, the first battery 1510 may have a first ID. The first battery 1510 may have first capacity. In an embodiment, the first capacity may be a battery capacity that operates the body 1000 for about 100 minutes in a general mode. The first battery 1510 may have a first weight, for example. In an embodiment, the first weight may be about 700 grams (g), for example. The first battery 1510 may be a large capacity battery that may improve suction performance of the body 1000 by increasing output power. In an embodiment, the first battery 1510 may output power of about 730 watts (W). In the disclosure, the large capacity battery may be also referred to as a performance type battery, for example.

In an embodiment of the disclosure, the second battery 1520 may have a second ID. The second battery 1520 may have second capacity. The second capacity may be less than the first capacity. In an embodiment, the second capacity may be a battery capacity that operates the body 1000 for about 60 minutes in the general mode, for example. The second battery 1520 may have a second weight. The second weight may be less than the first weight. In an embodiment, the second weight may be about 500 g. The second battery 1520 may be a small capacity battery that may improve portability of the body 1000 by reducing a weight, for example. In an embodiment, the second battery 1520 may output power of about 610 W. In the disclosure, the small capacity battery may be also referred to as a lightweight type battery, for example.

In an embodiment of the disclosure, the communication interface 1600 may perform communication with an external device. In an embodiment, the communication interface 1600 may perform communication with the station 200 or server device. The communication interface 1600 may include a short-range wireless communication interface and a long-range wireless communication interface. The short-range wireless communication interface may perform communication with the station 200. In an embodiment, the short-range wireless communication interface may include a Bluetooth^{™} communication interface, a BLE communication interface, an NFC interface, a WLAN (e.g., Wi-Fi^{™}) communication interface, a Zigbee communication interface, an IrDA communication interface, a WFD communication interface, an UWB communication interface, or an Ant+ communication interface, for example.

In an embodiment of the disclosure, the user interface 1700 may be provided at a handle portion. The user interface 1700 may include an input unit and an output unit. The input unit may receive a user input related to an operation of the cordless vacuum cleaner 100. In an embodiment, the input unit may include a power button and a suction power strength adjusting button, for example. The power button may receive a user input of starting or stopping a suction operation of the body 1000. The suction power strength adjusting button may receive a user input of adjusting suction strength. The output unit may output information related to an operation of the cordless vacuum cleaner 100. In an embodiment, the output unit may include a display or a speaker. The display may include an LCD, an LED, an organic LED (OLED), a quantum dot, a micro LED, or a touchscreen, for example. In an embodiment, the output unit may display, through the display, a current operating mode, such as a jet mode, a super-power mode, a power mode, or a general mode, during a suction operation of the body 1000, a type of the at least one battery 1500, a remaining amount of the at least one battery 1500, a temperature of the at least one battery 1500, or information about a current mode from among modes for distinguishing abnormality of the at least one battery 1500, such as a normal mode, an overload mode, and a protection mode, or may output the same through the speaker as a notification, for example.

In an embodiment of the disclosure, the at least one processor may control all operations of the cordless vacuum cleaner 100. In an embodiment, the at least one processor may determine the power consumption (suction power strength) of the suction motor 1110, a drum RPM of the brush device 2000, and a trip level of the brush device 2000, for example. In an embodiment, the at least one processor may operate the suction motor 1110 for dust discharge, based on a control signal received from the station 200, for example.

In an embodiment of the disclosure, the at least one processor may control at least one of the fully-charged voltage or the final discharge voltage of the at least one battery 1500, according to an output of the suction motor 1110 of the body 1000 and a battery use condition. The battery use condition may include charging and discharging cycles of a battery and heat generation of a battery cell. Handy suction power strength may be strength of a suction operation that changes according to an operating mode. The at least one processor in an embodiment of the disclosure may control at least one of the fully-charged voltage or final discharge voltage of the at least one battery 1500 according to the output of the suction motor 1110 and the battery use condition, so as to enhance a life of the at least one battery 1500 or extend a usage time of the at least one battery 1500.

In an embodiment of the disclosure, the fully-charged voltage of the at least one battery 1500 may be a voltage of the at least one battery 1500 when the at least one battery 1500 is charged to maximum within a range that does not deteriorate the performance of the at least one battery 1500. In an embodiment, the fully-charged voltage of the at least one battery 1500 may be about 4.2 V, for example. When the voltage of the at least one battery 1500 is greater than the fully-charged voltage, the performance of the at least one battery 1500 may deteriorate or the at least one battery 1500 may be damaged.

In an embodiment of the disclosure, the final discharge voltage of the at least one battery 1500 may be a voltage of the at least one battery 1500 when the at least one battery 1500 is discharged to maximum or is used within a range that does not deteriorate the performance of the at least one battery 1500 or change the performance of the body 1000. In an embodiment, the final discharge voltage of the at least one battery 1500 may be about 2.7 V, for example. When the voltage of the at least one battery 1500 is less than the final discharge voltage, the performance of the at least one battery 1500 may deteriorate or the performance of the body 1000 may deteriorate.

In an embodiment of the disclosure, the at least one processor may include at least one of a CPU, a GPU, an APU, a MIC, a DSP, or an NPU. In an embodiment, the at least one processor may be implemented in the form of an SoC including one or more electronic components, for example. In an embodiment, the at least one processor may be implemented as individual hardware, for example. In an embodiment, the at least one processor may be also referred to as a micro-computer, microprocessor computer, or MICOM, an MPU, or an MCU, for example. In an embodiment, the at least one processor may be implemented as a single core processor or a multicore processor, for example.

In an embodiment of the disclosure, the memory 1900 may store a program for processing and control by the at least one processor. The memory 1900 may store pieces of data input to the at least one processor or output from the at least one processor. In an embodiment, the memory 1900 may store a pre-trained artificial intelligence (AI) model (e.g., a support vector machine (SVM) algorithm), state data of the suction motor 1110, a measurement value of the pressure sensor 1400, state data of the battery 1500, state data of the brush device 2000, error occurrence data (malfunction history data), power consumption of the suction motor 1110 corresponding to an operating condition, RPM of a drum with a rotating brush, a trip level, and an operating sequence of the suction motor 1110 corresponding to a suction power generation pattern, for example. The trip level is for preventing overload of the brush device 2000, and may denote a reference load value (e.g., a reference current value) for stopping an operation of the brush device 2000.

In an embodiment of the disclosure, the memory 1900 may include an external memory 1910 and an internal memory 1920. In an embodiment, the memory 1900 may include at least one type of storage medium among a flash memory type, a hard disk type, a multimedia card micro type, a card type memory (e.g., an SD or an XD memory), a RAM, an SRAM, a ROM, an EEPROM, a PROM, a magnetic memory, a magnetic disk, and an optical disk, for example. Programs stored in the memory 1900 may be classified into a plurality of modules depending on functions.

The at least one battery 1500 among batteries having different capacities from each other may be used by being attached to or detached from the body 1000 of the cordless vacuum cleaner 100, according to the disclosure, and thus the at least one battery 1500 may be selectively used according to a cleaning purpose of the user, a use, and a usage environment. The at least one processor of the cordless vacuum cleaner 100 in an embodiment of the disclosure may vary a control method according to a type of the at least one battery 1500 such that the user may use the cordless vacuum cleaner 100 more efficiently and safely in various operating modes, such as a high-output mode and a lightweight mode. The at least one processor of the cordless vacuum cleaner 100 in an embodiment of the disclosure may control the fully-charged voltage and the final discharge voltage, which mainly affect the life and usage time of the at least one battery 1500. The at least one processor of the cordless vacuum cleaner 100 in an embodiment of the disclosure may control the fully-charged voltage and the final discharge voltage, based on a condition about the state of the at least one battery 1500, such as charging and discharging cycles, and suction strength related to power consumption of the suction motor 1110 of the body 1000. Accordingly, the at least one processor of the cordless vacuum cleaner 100 in an embodiment of the disclosure may extend the life of the at least one battery 1500 and extend the usage time of the at least one battery 1500.

Hereinafter, functions of components included in the body 1000 and station 200 will be described with reference to FIG. 4.

FIG. 4 is a block diagram of an embodiment of the cordless vacuum cleaner 100, according to the disclosure. The body 1000 of the cordless vacuum cleaner 100 in an embodiment of the disclosure may include the suction motor 1110, the at least one battery 1500, a charge connecting portion (also referred to as a charge connector) 1590, an output unit 1720, and the first communication interface 1600 included in a body circuit board 1810, a second communication interface 1650, an input unit 1710, and the main processor 1800.

In an embodiment of the disclosure, the suction motor 1110 may be provided below the handle portion of the body 1000. In an embodiment, the suction motor 1110 may be provided adjacent to the dust container 1200 of the body 1000 or inside the dust container 1200, for example. The suction motor 1110 may operate by power received from the at least one battery 1500. While operating, the suction motor 1110 may provide suction power of sucking up the air into the body 1000. According to the suction power provided by the suction motor 1110, the body 1000 may suck up foreign materials, such as dust, and transmit the same to the dust container 1200.

In an embodiment of the disclosure, the second communication interface 1650 may communicate with the at least one battery 1500. The second communication interface 1650 may communicate with a communicator included in the at least one battery 1500. In an embodiment, the second communication interface 1650 may communicate with the at least one battery 1500 through a universal asynchronous receiver/transmitter (UART) communication or I2C communication method, for example. The second communication interface 1650 may receive information about the at least one battery 1500. In an embodiment, the second communication interface 1650 may receive at least one of a type of the at least one battery 1500, an ID of the at least one battery 1500, capacity of the at least one battery 1500, remaining capacity of the at least one battery 1500, a current voltage of the at least one battery 1500, or temperature information of the at least one battery 1500, for example.

In an embodiment of the disclosure, the at least one battery 1500 may perform UART communication with the main processor 1800. The at least one battery 1500 may perform UART communication with the main processor 1800 through the second communication interface 1650.

In an embodiment of the disclosure, the charge connecting portion 1590 may include at least one terminal, at least one pin, or at least one charging connector. The charge connecting portion 1590 may receive power from the station 200. The charge connecting portion 1590 may transmit the received power to the at least one battery 1500.

In an embodiment of the disclosure, the output unit 1720 may include a display, such as an LCD, an LED, or a touchscreen. The output unit 1720 may display information about the body 1000, which is received from the main processor 1800. In an embodiment, the output unit 1720 may display at least one of a type of the at least one battery 1500, an ID of the at least one battery 1500, capacity of the at least one battery 1500, remaining capacity of the at least one battery 1500, a voltage of the at least one battery 1500, a state of the at least one battery 1500, or a temperature of the at least one battery 1500, for example.

In an embodiment of the disclosure, the main processor 1800 may include a micro controller unit (MCU) and a control circuit. The main processor 1800 may perform UART communication with the suction motor 1110. The main processor 1800 may perform UART communication with the at least one battery 1500. The main processor 1800 may perform UART communication with the first communication interface 1600. The main processor 1800 may receive a user input from the input unit 1710. In an embodiment, the input unit 1710 may be a surface-mounted device (SMD) operating button arranged on the body circuit board 1810. The main processor 1800 may perform general control related to operations of the body 1000, for example.

In an embodiment of the disclosure, the main processor 1800 may identify a type of the at least one battery 1500. In an embodiment, the main processor 1800 may perform UART communication with the at least one battery 1500 and receive the ID of the at least one battery 1500. The main processor 1800 may identify the type of the at least one battery 1500, based on the ID of the at least one battery 1500, for example.

In an embodiment of the disclosure, the station 200 may include the communication interface 201, the station processor 203, the power supply device 208, and a charge connecting portion 211. The communication interface 201 and the station processor 203 may be arranged on a station circuit board. The station 200 may additionally include other components that are not illustrated. In an embodiment, the station 200 may further include an input unit, a dust storage portion, a motor, a door, a body accommodating portion, a sensor module, and a display, for example.

In an embodiment of the disclosure, the communication interface 201 may perform short-range communication and long-range communication. The communication interface 201 may perform short-range communication, such as UART communication, with the station processor 203. The communication interface 201 may perform short-range communication, such as BLE communication, with the body 1000. The communication interface 201 may perform long-range communication, such as Wi-Fi^{™} communication, with the server device.

In an embodiment of the disclosure, the station processor 203 may include an MCU and a control circuit. The station processor 203 may perform general control related to operations of the station 200.

In an embodiment of the disclosure, the power supply device 208 may receive electric energy from an external power source. The power supply device 208 may convert received alternating current (AC) power into direct current (DC) power that has a voltage and current usable by the cordless vacuum cleaner 100. In an embodiment, the power supply device 208 may receive AC power having a voltage equal to or greater than 110 V and equal to or less than 240 V from the external power source, and convert the AC power into DC power having a voltage of 30 V and a current of 1.25 ampere (A), for example. The power supply device 208 may transmit the DC power to the station processor 203.

In an embodiment of the disclosure, the charge connecting portion 211 may receive power from the station processor 203. The charge connecting portion 211 may transmit power to the charge connecting portion 1590 of the body 1000. The charge connecting portion 211 may be connected to the charge connecting portion 1590 of the body 1000.

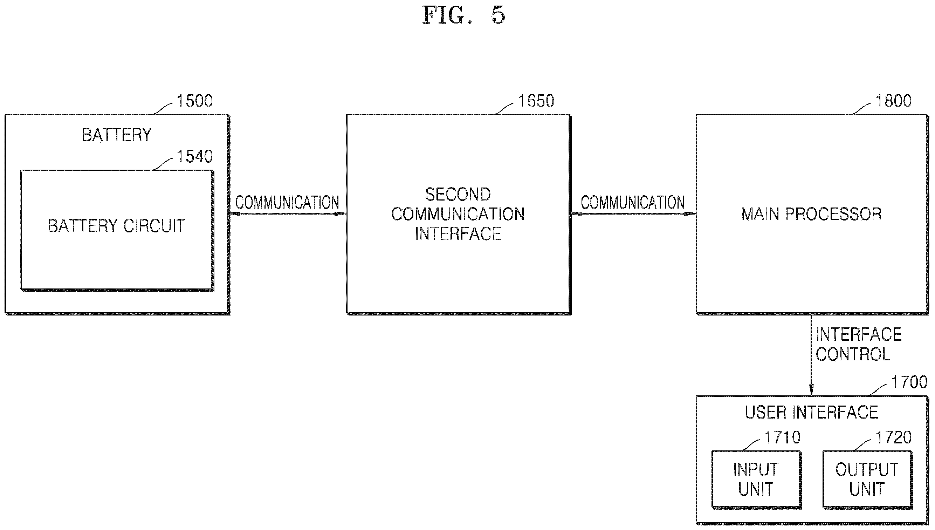

Hereinafter, components related to controlling of the at least one battery 1500 of the body 1000 will be described with reference to FIG. 5.

FIG. 5 is a block diagram for describing an embodiment of controlling of the at least one battery 1500 of the cordless vacuum cleaner 100, according to the disclosure.

In an embodiment of the disclosure, the at least one battery 1500 may include a battery circuit 1540. The battery circuit 1540 may control the at least one battery 1500. In an embodiment, the battery circuit 1540 may be a battery management system (BMS) circuit of the at least one battery 1500, for example. The battery circuit 1540 may include a communicator. The at least one battery 1500 including the battery circuit 1540 may communicate with the main processor 1800 by being connected to the second communication interface 1650 through UART communication or I2C communication. In an embodiment, the battery circuit 1540 may detect an event in which the at least one battery 1500 is attached to the body 1000 of the cordless vacuum cleaner 100, for example. The battery circuit 1540 may initiate communication with the main processor 1800 using the second communication interface 1650, in response to the event in which the at least one battery 1500 is attached to the body 1000 of the cordless vacuum cleaner 100.

In an embodiment of the disclosure, the main processor 1800 may perform interface control for the second communication interface 1650 and the user interface 1700. The main processor 1800 may communicate with the at least one battery 1500 by the second communication interface 1650. The main processor 1800 may obtain the ID of the at least one battery 1500 received by the second communication interface 1650. The main processor 1800 may identify the type of the at least one battery 1500 detachably coupled to the body 1000, based on the ID of the at least one battery 1500. In an embodiment, the main processor 1800 may identify whether the at least one battery 1500 is a performance type battery or a lightweight type battery, based on the ID of the at least one battery 1500, for example. The main processor 1800 may identify information about a specification of the at least one battery 1500, based on the ID of the at least one battery 1500. In an embodiment, the main processor 1800 may identify the capacity of the at least one battery 1500 by identifying the type of the at least one battery 1500, for example.

In an embodiment of the disclosure, the main processor 1800 may identify information about the state of the at least one battery 1500, based on information about the at least one battery 1500 received from the second communication interface 1650. In an embodiment, the main processor 1800 may identify at least one of a normal or overload operation of the at least one battery 1500, the remaining capacity of the at least one battery 1500, or the temperature information of the at least one battery 1500, based on the information about the at least one battery 1500 received from the second communication interface 1650, for example.

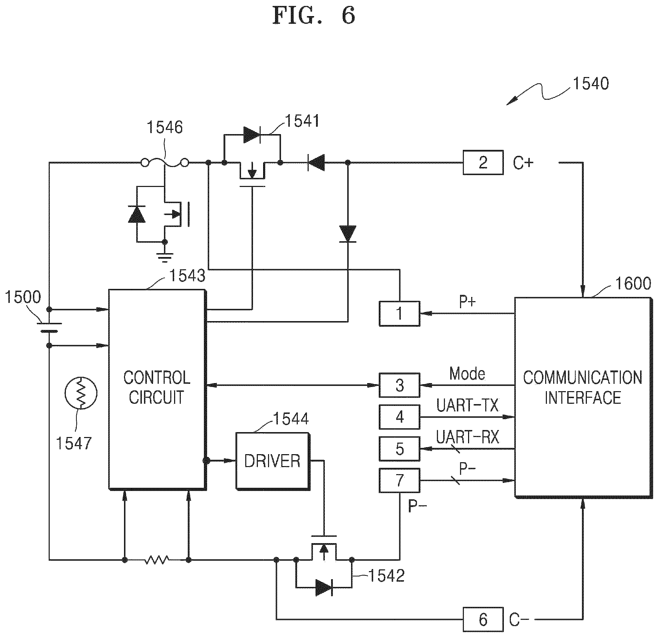

Hereinafter, a detailed structure of the battery circuit 1540 will be described with reference to FIG. 6.

FIG. 6 is a circuit diagram of an embodiment of the battery circuit 1540 of the cordless vacuum cleaner 100, according to the disclosure. The battery circuit 1540 may be a control circuit inside the at least one battery 1500. In an embodiment, the battery circuit 1540 may be a BMS circuit of the at least one battery 1500, for example. The battery circuit 1540 may include a first switch 1541, a second switch 1542, a control circuit 1543, a driver 1544, a fuse 1546, and a temperature sensor 1547. The battery circuit 1540 may include a plurality of pins that transmit/receive signals to/from the communication interface 1600.

In an embodiment of the disclosure, the first switch 1541 may control a charging voltage or a state-of-charge (SoC) of the at least one battery 1500. In an embodiment, the first switch 1541 may control the fully-charged voltage of the at least one battery 1500, for example.

In an embodiment of the disclosure, the second switch 1542 may control a discharge voltage of the at least one battery 1500. In an embodiment, the second switch 1542 may control the final discharge voltage of the at least one battery 1500, for example.

In an embodiment of the disclosure, the control circuit 1543 may include an MCU and a protection circuit. The control circuit 1543 may detect a charge current and a discharge current of the at least one battery 1500 by detecting currents and voltages at opposite ends of a load (e.g., a resistor). The control circuit 1543 may control the first switch 1541, the second switch 1542, and the driver 1544. The control circuit 1543 may transmit/receive signals to/from the communication interface 1600. The control circuit 1543 may control a charge voltage and discharge voltage of the at least one battery 1500 by controlling the first switch 1541 and second switch 1542, based on the signals received from the communication interface 1600. The fuse 1546 may protect the control circuit 1543 by blocking an overcurrent flowing in the control circuit 1543.

The control circuit 1543 in an embodiment of the disclosure may transmit, to the communication interface 1600, information about the type of the at least one battery 1500 and the state of the at least one battery 1500. The at least one main processor (hereinafter also referred to as at least one processor for convenience)1800 of the body 1000 may generate a signal for controlling at least one of the fully-charged voltage or final discharge voltage of the at least one battery 1500, based on the information about the type of the at least one battery 1500 and the state of the at least one battery 1500, received from the communication interface 1600. The at least one processor 1800 may transmit, by the communication interface 1600, a signal for controlling at least one of the final discharge voltage or the fully-charged voltage of the at least one battery 1500. The control circuit 1543 may control at least one of the fully-charged voltage or final discharge voltage of the at least one battery 1500, based on the control signal received from the communication interface 1600. Accordingly, the at least one processor 1800 in an embodiment of the disclosure may control at least one of the fully-charged voltage or final discharge voltage of the at least one battery 1500, based on the information about the type of the at least one battery 1500 and the state of the at least one battery 1500.

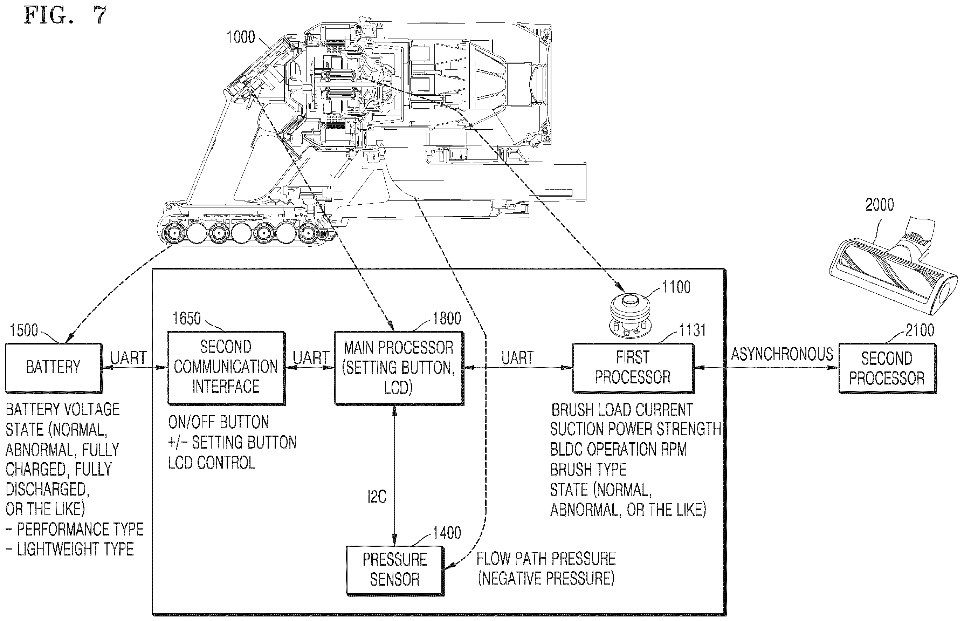

Hereinafter, structures and functions of components included in the body 1000 of the cordless vacuum cleaner 100 will be described with reference to FIG. 7.

FIG. 7 is a diagram for describing an embodiment of structures and functions of the components of the body 1000 of the cordless vacuum cleaner 100, according to the disclosure.

In an embodiment of the disclosure, the main processor 1800 may receive a user input on a setting button (e.g., an on/off button or a +/- setting button) included in the user interface 1700. The main processor 1800 may control an output of an LCD. The main processor 1800 may include a pre-trained AI model (e.g., an SVM algorithm).

In an embodiment of the disclosure, the main processor 1800 may identify states of components in the cordless vacuum cleaner 100 by communicating with the communication interface 1600 (e.g., the second communication interface 1650), the at least one battery 1500, the pressure sensor 1400, and the first processor 1131 in the motor assembly 1100. In an embodiment, the main processor 1800 may communicate with each component by UART communication or I2C communication, for example. In an embodiment, the main processor 1800 may obtain, from the at least one battery 1500 by UART, data related to a voltage state (e.g., normal, abnormal, fully charged, or fully discharged) of the at least one battery 1500, for example. In an embodiment, the main processor 1800 may obtain, from the at least one battery 1500 by UART, data related to the type of the at least one battery 1500. In an embodiment, the main processor 1800 may obtain data related to whether the type of the at least one battery 1500 is a performance type or a lightweight type, for example.

In an embodiment of the disclosure, the main processor 1800 may obtain, from the first processor 1131 connected to the suction motor 1110 by the UART, data related to suction power strength, RPM of the suction motor 1110, and a state (e.g., normal or abnormal) of the suction motor 1110. Suction power is electric force consumed to operate the cordless vacuum cleaner 100, and may be also referred to as power consumption. The first processor 1131 may be connected to a second processor 2100 of the brush device 2000 through asynchronous communication.

In an embodiment of the disclosure, the main processor 1800 may transmit/receive information to/from the at least one battery 1500 and the suction motor 1110 periodically through communication. In an embodiment, the main processor 1800 may transmit/receive the operating mode of the suction motor 1110, the temperature information of the at least one battery 1500, and the type of the at least one battery 1500. The main processor 1800 may control an output of the suction motor 1110, based on the type of the at least one battery 1500, for example. The main processor 1800 may control at least one of the fully-charged voltage or final discharge voltage of the at least one battery 1500, based on at least one of the type of the at least one battery 1500, the state of the at least one battery 1500, or the output of the suction motor 1110. Accordingly, the main processor 1800 may improve the life of the at least one battery 1500 and the usage time of the at least one battery 1500 by setting the fully-charged voltage and final discharge voltage of the at least one battery 1500 according to a usage situation.

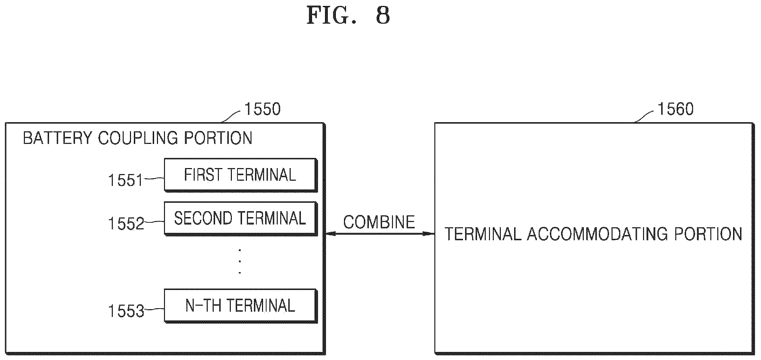

In an embodiment of the disclosure, when the at least one battery 1500 includes a communicator, the main processor 1800 may communicate with the at least one battery 1500 by the communication interface 1600 to identify the type of the at least one battery 1500. In an embodiment of the disclosure, the main processor 1800 may identify the type of the at least one battery 1500 by an identifying terminal of a battery coupling portion 1550 when the at least one battery 1500 is coupled. Hereinafter, the battery coupling portion 1550 will be described with reference to FIG. 8.

FIG. 8 is a block diagram of an embodiment of the battery coupling portion 1550 and a terminal accommodating portion 1560 of the at least one battery 1500 of the cordless vacuum cleaner 100, according to the disclosure.

In an embodiment of the disclosure, the battery coupling portion 1550 may have a structure to and from which the at least one battery 1500 is attachable and detachable. The battery coupling portion 1550 may include a plurality of terminals including a first terminal 1551, a second terminal 1552, and an N-th terminal 1553, where N is a natural number equal to or greater than three. The battery coupling portion 1550 may couple the at least one battery 1500 to the body 1000.

In an embodiment of the disclosure, the at least one battery 1500 may include the terminal accommodating portion 1560. The terminal accommodating portion 1560 may accommodate the plurality of terminals of the battery coupling portion 1550. In an embodiment, the terminal accommodating portion 1560 may be a receptacle combining the plurality of terminals, for example.

In an embodiment of the disclosure, one of the plurality of terminals may be an identifying terminal. In an embodiment, the first terminal 1551 may be the identifying terminal, for example. The identifying terminal may be selectively combined with the terminal accommodating portion 1560 according to the type of the at least one battery 1500. In an embodiment, when the at least one battery 1500 is a performance type battery, the first terminal 1551 may be combined with the terminal accommodating portion 1560, for example. In an embodiment, when the at least one battery 1500 is a lightweight type battery, the first terminal 1551 may not be combined with the terminal accommodating portion 1560, for example.

In an embodiment of the disclosure, the main processor 1800 may identify the type of the at least one battery 1500, based on whether the at least one battery 1500 is detachably coupled to the identifying terminal 1551 of the battery coupling portion 1550. In an embodiment, when the at least one battery 1500 is detachably coupled to the identifying terminal 1551, the main processor 1800 may determine that the at least one battery 1500 is a performance type battery, for example. In an embodiment, when the at least one battery 1500 is not coupled to the identifying terminal 1551, the main processor 1800 may determine that the at least one battery 1500 is a lightweight type battery, for example. In an embodiment, even when the at least one battery 1500 does not include a communicator, the main processor 1800 may identify the type of the at least one battery 1500 by the identifying terminal 1551, for example.

In an embodiment of the disclosure, the battery coupling portion 1550 may include a circuit including a load, such as a resistor. The at least one processor 1800 may identify an impedance value of the load of the battery coupling portion 1550 when the at least one battery 1500 is detachably coupled to the battery coupling portion 1550. The at least one processor 1800 may identify the type of the at least one battery 1500, based on the impedance value of the load of the battery coupling portion 1550.

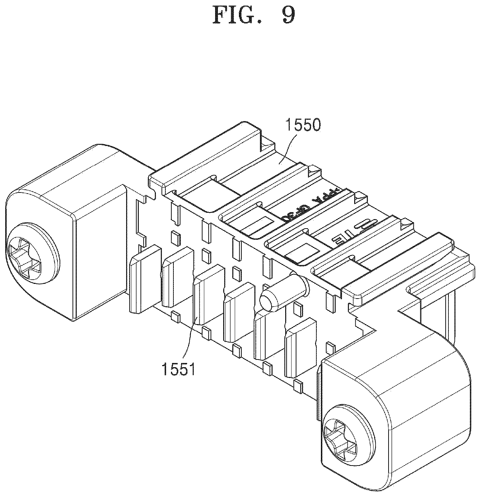

Hereinafter, a structure of the battery coupling portion 1550 will be described with reference to FIG. 9.

FIG. 9 is a diagram of an embodiment of the battery coupling portion 1550 of the cordless vacuum cleaner 100, according to the disclosure.

In an embodiment of the disclosure, the battery coupling portion 1550 may include a plurality of terminals, such as tabs and pins. One of the plurality of terminals may be the identifying terminal 1551. The identifying terminal 1551 may contact or not contact the at least one battery 1500 according to the type of the at least one battery 1500. The at least one processor 1800 may identify the type of the at least one battery 1500 by identifying whether the identifying terminal 1551 contacts the at least one battery 1500.

In an embodiment of the disclosure, a length of the identifying terminal 1551 may be different from lengths of other terminals. The at least one processor 1800 may determine whether the at least one battery 1500 is a performance type battery or a lightweight type battery by identifying whether the identifying terminal 1551 contacts the at least one battery 1500. In an embodiment, the at least one processor 1800 may determine that the at least one battery 1500 is a performance type battery when the identifying terminal 1551 contacts the at least one battery 1500, for example. In an embodiment, the at least one processor 1800 may determine that the at least one battery 1500 is a lightweight type battery when the identifying terminal 1551 does not contact the at least one battery 1500, for example.

In an embodiment of the disclosure, the battery coupling portion 1550 may include a switch, such as a tact switch or a microswitch. The at least one processor 1800 may identify the type of the at least one battery 1500, based on a contact between the battery coupling portion 1550 and a contact protrusion of the terminal accommodating portion 1560. In an embodiment, the at least one processor 1800 may determine that the at least one battery 1500 is a performance type when the switch operates as the switch of the battery coupling portion 1550 and the contact protrusion of the terminal accommodating portion 1560 are connected to each other, for example. In an embodiment, the at least one processor 1800 may determine that the at least one battery 1500 is a lightweight type when the switch does not operate as the switch of the battery coupling portion 1550 and the contact protrusion of the terminal accommodating portion 1560 are not connected to each other, for example.

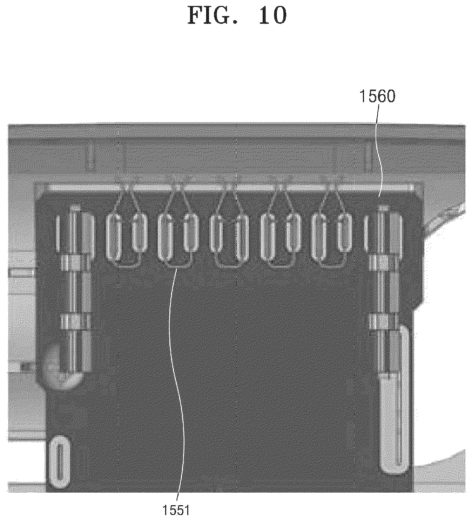

Hereinafter, a structure in which the battery coupling portion 1550 and the terminal accommodating portion 1560 are combined, when the at least one battery 1500 is a performance type battery will be described with reference to FIG. 10.

FIG. 10 is a diagram showing an embodiment of the terminal accommodating portion 1560 of the at least one battery 1500 being detachably coupled to the battery coupling portion 1550 of the cordless vacuum cleaner 100, according to the disclosure.

In an embodiment of the disclosure, the identifying terminal 1551 of the battery coupling portion 1550 may have a length and a shape combinable with the terminal accommodating portion 1560 of the at least one battery 1500. The terminal accommodating portion 1560 of the at least one battery 1500 may have a length and a shape corresponding to the identifying terminal 1551. The identifying terminal of the battery coupling portion 1550 may be combined with the terminal accommodating portion 1560. The at least one processor 1800 may determine that the at least one battery 1500 is a performance type battery.

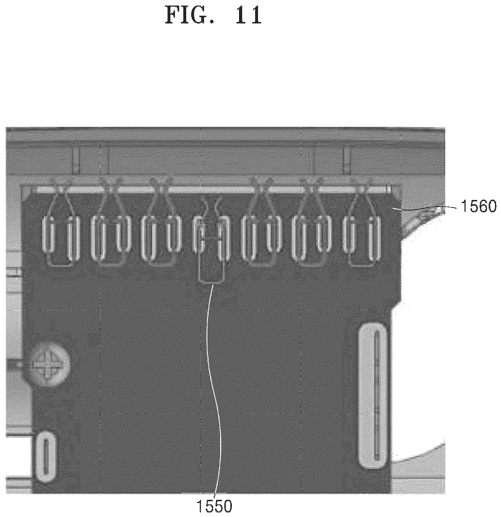

Hereinafter, a structure in which the battery coupling portion 1550 and the terminal accommodating portion 1560 are combined, when the at least one battery 1500 is a lightweight type battery will be described with reference to FIG. 11.

FIG. 11 is a diagram showing an embodiment of the terminal accommodating portion 1560 of the at least one battery 1500 being coupled with the battery coupling portion 1550 of the cordless vacuum cleaner 100, according to the disclosure.

In an embodiment of the disclosure, the identifying terminal 1551 of the battery coupling portion 1550 may have a length or shape not combinable with the terminal accommodating portion 1560 of the at least one battery 1500. The terminal accommodating portion 1560 of the at least one battery 1500 may have a length and a shape different from those of the identifying terminal 1551. The identifying terminal 1551 of the battery coupling portion 1550 may not be combined with the terminal accommodating portion 1560. The at least one processor 1800 may determine that the at least one battery 1500 is a lightweight type battery.

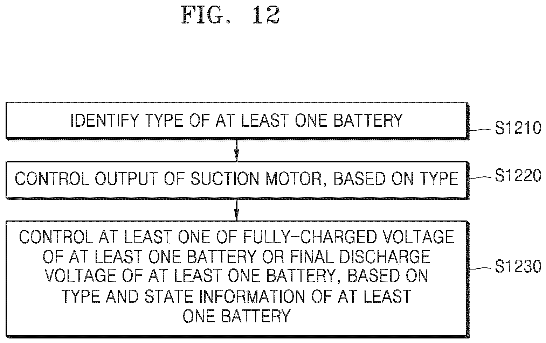

Hereinafter, a control method for the cordless vacuum cleaner 100 will be described with reference to FIG. 12.

FIG. 12 is a flowchart of an embodiment of a control method for the cordless vacuum cleaner 100, according to the disclosure.

In operation S1210, the at least one processor 1800 of the cordless vacuum cleaner 100, in an embodiment of the disclosure may identify information on the type of the at least one battery 1500. Various types of batteries 1500 may be attached to or detached from the cordless vacuum cleaner 100 according to the disclosure. In an embodiment, a performance type battery may be attached to increase an output of the suction motor 1110 of the cordless vacuum cleaner 100 and increase a usage time of the cordless vacuum cleaner 100, for example. In an embodiment, a lightweight type battery may be attached to reduce a weight of the cordless vacuum cleaner 100, thereby improving portability, for example. The at least one battery 1500 may have different battery IDs according to types. When the at least one battery 1500 is detachably coupled to the body 1000 of the cordless vacuum cleaner 100, the at least one processor 1800 may receive an ID from the at least one battery 1500. In an embodiment, the at least one processor 1800 may control the communication interface 1600 to receive the ID from the at least one battery 1500 by communication such as UART or I2C, for example. The at least one processor 1800 may identify the information on the type of the at least one battery 1500, based on the ID of the at least one battery 1500.

In operation S1220, the at least one processor 1800 in an embodiment of the disclosure may control an output of the suction motor 1110, based on the information on the type. The at least one processor 1800 may control the output of the suction motor 1110 to correspond to the type of the at least one battery 1500. The at least one processor 1800 may control the suction motor 1110 to be a first output when the at least one battery 1500 is a performance type battery. In an embodiment, the at least one processor 1800 may control the output of the suction motor 1110 to about 270 W when the at least one battery 1500 is a performance type battery, for example. The at least one processor 1800 may control the suction motor 1110 to be a second output lower than the first output when the at least one battery 1500 is a lightweight type battery. In an embodiment, the at least one processor 1800 may control the output of the suction motor 1110 to about 220 W when the at least one battery 1500 is a lightweight type battery, for example.

In operation S1230, the at least one processor 1800 in an embodiment of the disclosure may control at least one of the fully-charged voltage of the at least one battery 1500 or the final discharge voltage of the at least one battery 1500, based on the information on the type and the state information of the at least one battery 1500. The at least one processor 1800 may receive the state information from the at least one battery 1500. In an embodiment, when the type of the at least one battery 1500 is identified, the at least one processor 1800 may determine or identify the state of the at least one battery 1500 by driving a battery state determination algorithm according to the capacity and characteristic of the at least one battery 1500, for example. In an embodiment, the at least one processor 1800 may identify which one of a normal mode, an overload mode, and a protection mode the at least one battery 1500 is in, for example. In an embodiment, the at least one processor 1800 may identify the remaining capacity of the at least one battery 1500 and the temperature information of the at least one battery 1500, for example. The at least one processor 1800 may control at least one of the fully-charged voltage or the final discharge voltage of the at least one battery 1500 to correspond to the mode of the at least one battery 1500. Accordingly, the cordless vacuum cleaner 100 in an embodiment of the disclosure may set the fully-charged voltage and final discharge voltage according to the type and state of the at least one battery 1500, thereby increasing the life and usage time of the at least one battery 1500 and increasing usage efficiency of the at least one battery 1500.

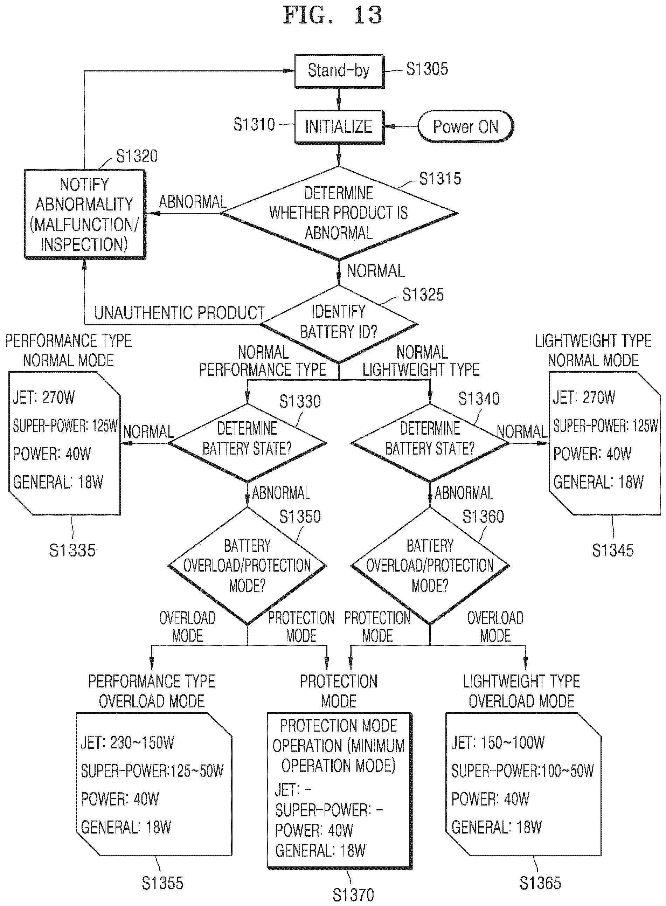

Hereinafter, detailed control method for the cordless vacuum cleaner 100 will be described with reference to FIG. 13.

FIG. 13 is a flowchart of an embodiment of a method of controlling the output of the suction motor 1110 according to an operating mode of the cordless vacuum cleaner 100, according to the disclosure.

In operation S1305, the cordless vacuum cleaner 100 in an embodiment of the disclosure may maintain a stand-by state.

In operation S1310, the cordless vacuum cleaner 100 in an embodiment of the disclosure may be initialized. Power of the cordless vacuum cleaner 100 may be turned on (power-on). The cordless vacuum cleaner 100 may be initialized when the power is turned on.

In operation S1315, the cordless vacuum cleaner 100 in an embodiment of the disclosure may determine whether a product is abnormal. When it is determined that the product is abnormal, the cordless vacuum cleaner 100 determines a state thereof as abnormal and may perform operation S1320. When it is determined that the product is not abnormal, the cordless vacuum cleaner 100 determines the state thereof as normal and may perform operation S1325.

In operation S1320, the cordless vacuum cleaner 100 in an embodiment of the disclosure may notify abnormality. The at least one processor 1800 of the body 1000 of the cordless vacuum cleaner 100 may display information about malfunction through the user interface 1700. The at least one processor 1800 may display a guide about an inspection through the user interface 1700.

In operation S1325, the cordless vacuum cleaner 100 in an embodiment of the disclosure may identify an ID of the at least one battery 1500. The at least one processor 1800 of the body 1000 of the cordless vacuum cleaner 100 may identify the ID of the at least one battery 1500 through the communication interface 1600. When the at least one battery 1500 is an unauthentic product based on a result of identifying the ID of the at least one battery 1500, the at least one processor 1800 may perform operation S1320 to notify the abnormality of the at least one battery 1500.

In an embodiment of the disclosure, when the at least one battery 1500 is a normal authentic product based on the result of identifying the ID of the at least one battery 1500, the at least one processor 1800 may identify the type of the at least one battery 1500. The at least one processor 1800 may perform operation S1330 when the at least one battery 1500 is a performance type battery. The at least one processor 1800 may perform operation S1340 when the at least one battery 1500 is a lightweight type battery.

In operation S1330, the cordless vacuum cleaner 100 in an embodiment of the disclosure may determine a state of the at least one battery 1500. The at least one processor 1800 of the body 1000 of the cordless vacuum cleaner 100 may identify whether the at least one battery 1500 is in a normal state. The at least one processor 1800 may perform operation S1335 when the at least one battery 1500 is in a normal state. The at least one processor 1800 may perform operation S1350 when the at least one battery 1500 is in an abnormal state.

In operation S1335, the cordless vacuum cleaner 100 in an embodiment of the disclosure may operate in a performance type normal mode. The at least one processor 1800 of the body 1000 of the cordless vacuum cleaner 100 may determine that the at least one battery 1500 is a performance type battery and is in a normal state. The at least one processor 1800 may control the output of the suction motor 1110 according to a case where the performance type battery operates in the normal state. In an embodiment, the at least one processor 1800 may control the output of the suction motor 1110 in suction power of about 270 W in a jet operating mode, for example. In an embodiment, the at least one processor 1800 may control the output of the suction motor 1110 in suction power of about 125 W in a super-power operating mode, for example. In an embodiment, the at least one processor 1800 may control the output of the suction motor 1110 in suction power of about 40 W in a power operating mode, for example. In an embodiment, the at least one processor 1800 may control the output of the suction motor 1110 in suction power of about 18 W in a general operating mode, for example.

In operation S1340, the cordless vacuum cleaner 100 in an embodiment of the disclosure may determine or identify the state of the at least one battery 1500. The at least one processor 1800 of the body 1000 of the cordless vacuum cleaner 100 may identify whether the at least one battery 1500 is in the normal state. The at least one processor 1800 may perform operation S1345 when the at least one battery 1500 is in the normal state. The at least one processor 1800 may perform operation S1360 when the at least one battery 1500 is in the abnormal state.

In operation S1345, the cordless vacuum cleaner 100 in an embodiment of the disclosure may operate in a lightweight type normal mode. The at least one processor 1800 of the body 1000 of the cordless vacuum cleaner 100 may determine that the at least one battery 1500 is a lightweight type battery and is in the normal state. The at least one processor 1800 may control the output of the suction motor 1110 according to a case where the lightweight type battery operates in the normal state. In an embodiment, the at least one processor 1800 may control the output of the suction motor 1110 in suction power of about 220 W in the jet operating mode, for example. In an embodiment, the at least one processor 1800 may control the output of the suction motor 1110 in suction power of about 125 W in a super-power operating mode, for example. In an embodiment, the at least one processor 1800 may control the output of the suction motor 1110 in suction power of about 40 W in a power operating mode, for example. In an embodiment, the at least one processor 1800 may control the output of the suction motor 1110 in suction power of about 18 W in a general operating mode, for example.

In an embodiment of the disclosure, when the at least one battery 1500 is in the normal state, the at least one processor 1800 may control a maximum output operating mode, based on the type of the at least one battery 1500. In an embodiment, in a case where the at least one battery 1500 is in the normal state, the at least one processor 1800 may control the output of the suction motor 1110 to suction power of about 270 W in the jet operating mode when the at least one battery 1500 is the performance type battery, and control the output of the suction motor 1110 to suction power of about 220 W in the jet operating mode when the at least one battery 1500 is the lightweight type battery, for example.

In an embodiment of the disclosure, when the at least one battery 1500 is in the normal state, the at least one processor 1800 may maintain the output of the suction motor 1110 in remaining operating modes, regardless of the type of the at least one battery 1500. In an embodiment, in a case where the at least one battery 1500 is in the normal state, the at least one processor 1800 may control the output of the suction motor 1110 to suction power of about 125 W in the super-power operating mode, control the output of the suction motor 1110 to suction power of about 40 W in the power operating mode, and control the output of the suction motor 1110 to suction power of about 18 W in the general operating mode, regardless of the type of the at least one battery 1500, for example.

In operation S1350, the cordless vacuum cleaner 100 in an embodiment of the disclosure may identify whether the at least one battery 1500 is in an overload mode or a protection mode. The at least one processor 1800 of the body 1000 of the cordless vacuum cleaner 100 may obtain at least one of the current input/output to/from the at least one battery 1500, the voltage of the at least one battery 1500, the remaining capacity of the at least one battery 1500, or the temperature of the at least one battery 1500. The at least one processor 1800 may identify whether the at least one battery 1500 is in the overload mode or the protection mode, based on the state of the at least one battery 1500. The at least one processor 1800 may perform operation S1355 when the at least one battery 1500 is in the overload mode. The at least one processor 1800 may perform operation S1370 when the at least one battery 1500 is in the protection mode.

In operation S1355, the cordless vacuum cleaner 100 in an embodiment of the disclosure may operate in a performance type overload mode. The at least one processor 1800 of the body 1000 of the cordless vacuum cleaner 100 may determine that the at least one battery 1500 is the performance type battery and is in an overload state. The at least one processor 1800 may control the output of the suction motor 1110 according to a case where the performance type battery operates in the overload state. In an embodiment, the at least one processor 1800 may control the output of the suction motor 1110 in suction power between 150 W and 220 W in the jet operating mode, for example. In an embodiment, the at least one processor 1800 may control the output of the suction motor 1110 in suction power between 50 W and 125 W in the super-power operating mode, for example. In an embodiment, the at least one processor 1800 may control the output of the suction motor 1110 in suction power of about 40 W in the power operating mode, for example. In an embodiment, the at least one processor 1800 may control the output of the suction motor 1110 in suction power of about 18 W in the general operating mode, for example.

In operation S1360, the cordless vacuum cleaner 100 in an embodiment of the disclosure may identify whether the at least one battery 1500 is in the overload mode or the protection mode. The at least one processor 1800 of the body 1000 of the cordless vacuum cleaner 100 may obtain at least one of the current input/output to/from the at least one battery 1500, the voltage of the at least one battery 1500, the remaining capacity of the at least one battery 1500, or the temperature of the at least one battery 1500. The at least one processor 1800 may identify whether the at least one battery 1500 is in the overload mode or the protection mode, based on the state of the at least one battery 1500. The at least one processor 1800 may perform operation S1365 when the at least one battery 1500 is in the overload mode. The at least one processor 1800 may perform operation S1370 when the at least one battery 1500 is in the protection mode.

In operation S1365, the cordless vacuum cleaner 100 in an embodiment of the disclosure may operate in a lightweight type overload mode. The at least one processor 1800 of the body 1000 of the cordless vacuum cleaner 100 may determine that the at least one battery 1500 is the lightweight type battery and is in the overload state. The at least one processor 1800 may control the output of the suction motor 1110 according to a case where the lightweight type battery operates in the overload state. In an embodiment, the at least one processor 1800 may control the output of the suction motor 1110 in suction power between 100 W and 150 W in the jet operating mode, for example. In an embodiment, the at least one processor 1800 may control the output of the suction motor 1110 in suction power between 50 W and 100 W in the super-power operating mode, for example. In an embodiment, the at least one processor 1800 may control the output of the suction motor 1110 in suction power of about 40 W in the power operating mode, for example. In an embodiment, the at least one processor 1800 may control the output of the suction motor 1110 in suction power of about 18 W in the general operating mode, for example.

In an embodiment of the disclosure, when the at least one battery 1500 is in the overload state, the at least one processor 1800 may control at least one operating mode. In an embodiment, when the at least one battery 1500 is in the overload state, the at least one processor 1800 may reduce the output of the suction motor 1110 in the jet operating mode and the super-power operating mode, for example. When the at least one battery 1500 is in the overload state, the at least one processor 1800 may limit an output of an operating mode having an output equal to or greater than a threshold value to the threshold value or less.

In operation S1370, the cordless vacuum cleaner 100 in an embodiment of the disclosure may operate in the protection mode. The at least one processor 1800 of the body 1000 of the cordless vacuum cleaner 100 may determine that the at least one battery 1500 is in the abnormal state that desires the protection mode. The at least one processor 1800 may control the output of the suction motor 1110 according to the protection mode.

In an embodiment of the disclosure, when the at least one battery 1500 is in the protection mode, the at least one processor 1800 may stop the output of the suction motor 1110 in at least one operating mode. In an embodiment, the at least one processor 1800 may stop the output of the suction motor 1110 in the jet operating mode and the super-power operating mode, for example. In an embodiment, the at least one processor 1800 may control the output of the suction motor 1110 in suction power of about 40 W in the power operating mode, for example. In an embodiment, the at least one processor 1800 may control the output of the suction motor 1110 in suction power of about 18 W in the general operating mode, for example.

The cordless vacuum cleaner 100 in an embodiment of the disclosure may use various types of batteries through attachment/detachment, by controlling the output of the suction motor 1110, based on the type and state of the at least one battery 1500. Also, the cordless vacuum cleaner 100 in an embodiment of the disclosure may operate the suction motor 1110 according to the state of the at least one battery 1500, thereby improving stability of the at least one battery 1500, the life of the at least one battery 1500, and the usage time of the at least one battery 1500.

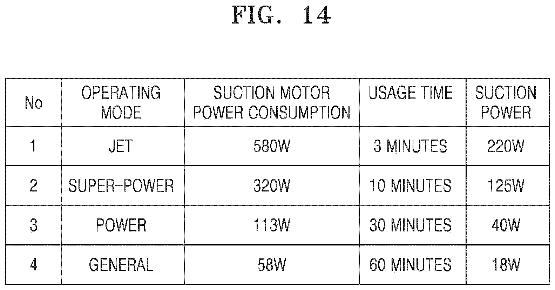

Hereinafter, power consumption of the suction motor 1110 according to the operating mode of the cordless vacuum cleaner 100 will be described with reference to FIG. 14.

FIG. 14 is a table showing an embodiment of a result of controlling the output of the suction motor 1110 according to an operating mode of the cordless vacuum cleaner 100, according to the disclosure.

In an embodiment of the disclosure, the at least one processor 1800 of the body 1000 of the cordless vacuum cleaner 100 may set the power consumption of the suction motor 1110 for each operating mode of the cordless vacuum cleaner 100. In an embodiment, the at least one processor 1800 may set the power consumption of the suction motor 1110 to about 580 W in the jet mode, for example. In an embodiment, the at least one processor 1800 may set the power consumption of the suction motor 1110 to about 320 W in the super-power mode, for example. In an embodiment, the at least one processor 1800 may set the power consumption of the suction motor 1110 to about 113 W in the power mode, for example. In an embodiment, the at least one processor 1800 may set the power consumption of the suction motor 1110 to about 58 W in the general mode, for example. The at least one processor 1800 may operate the cordless vacuum cleaner 100 by operating the suction motor 1110 in the set power consumption.

In an embodiment of the disclosure, the at least one processor 1800 may increase a rotating RPM of an impeller of the suction motor 1110 by increasing the power consumption of the suction motor 1110. When the rotating RPM of the suction motor 1110 increases, a vacuum level and flow rate inside the cordless vacuum cleaner 100 may increase, and thus dust suction power of the cordless vacuum cleaner 100 may increase. In an embodiment, the suction power in the jet mode may be about 220 W. In an embodiment, the suction power in the super-power mode may be about 125 W. In an embodiment, the suction power in the power mode may be about 40 W. In an embodiment, the suction power in the general mode may be about 18 W.

In an embodiment of the disclosure, the at least one processor 1800 may operate the cordless vacuum cleaner 100 by operating the suction motor 1110 by the usage time in the set operating mode. In an embodiment, the at least one processor 1800 may set the usage time to about 3 minutes in the jet mode, for example. In an embodiment, the at least one processor 1800 may set the usage time to about 10 minutes in the super-power mode, for example. In an embodiment, the at least one processor 1800 may set the usage time to about 30 minutes in the power mode, for example. In an embodiment, the at least one processor 1800 may set the usage time to about 60 minutes in the general mode, for example.

The usage time of the cordless vacuum cleaner 100 in an embodiment of the disclosure may decrease as the power consumption and suction power increase. The at least one processor 1800 may control power output from the at least one battery 1500, according to the operating mode of the cordless vacuum cleaner 100.

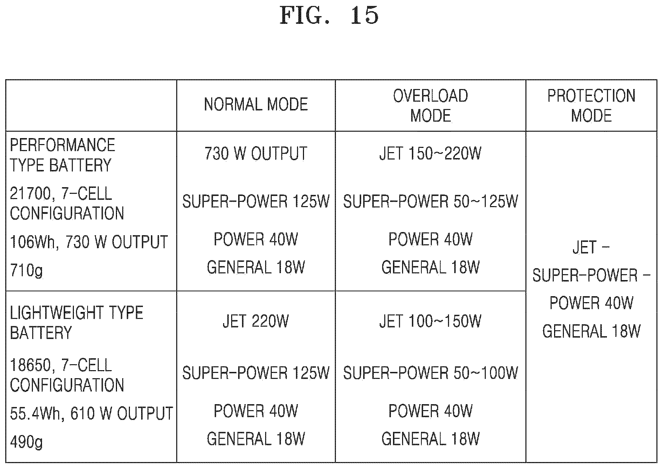

Hereinafter, the power consumption according to the type of the at least one battery 1500 and the normal mode or overload mode of the at least one battery 1500 will be described with reference to FIG. 15.

FIG. 15 is a table showing an embodiment of a result of controlling the output of the suction motor 1110 according to an operating mode of the cordless vacuum cleaner 100, according to the disclosure.

In an embodiment of the disclosure, the at least one processor 1800 of the body 1000 of the cordless vacuum cleaner 100 may identify the type of the at least one battery 1500 and abnormality of the at least one battery 1500. The at least one processor 1800 may control the maximum output mode, based on the type of the at least one battery 1500. In an embodiment, the at least one processor 1800 may set the output of the suction motor 1110 to be low, in the jet mode of the lightweight type battery, compared to the performance type battery, for example.

In an embodiment of the disclosure, when the state of the at least one battery 1500 is abnormal, the at least one processor 1800 may operate in the overload mode or protection mode, in the abnormal mode. The at least one processor 1800 may reduce the output of the suction motor 1110 in at least one operating mode including the maximum output mode, in the overload mode. In an embodiment, the at least one processor 1800 may reduce the output of the suction motor 1110 in the jet mode and super-power mode compared to the normal mode, so as to protect the at least one battery 1500 in the overload mode, for example. The at least one processor 1800 may stop the output of the suction motor 1110 in at least one operating mode including the maximum output mode, in the protection mode. In an embodiment, the at least one processor 1800 may stop the output of the suction motor 1110 in the jet mode and super-power mode compared to the normal mode, so as to protect the at least one battery 1500 in the overload mode, for example.

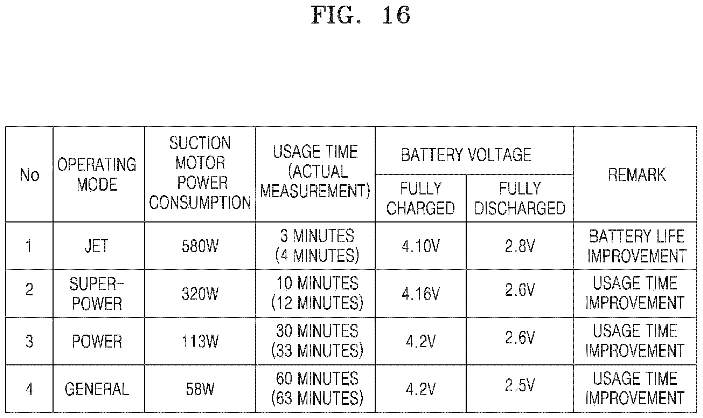

Hereinafter, the fully-charged voltage and final discharge voltage of the at least one battery 1500, according to an operating mode, will be described with reference to FIG. 16.

FIG. 16 is a table showing an embodiment of a result of controlling at least one of the fully-charged voltage or the final discharge voltage of the battery 1500, according to an operating mode of the cordless vacuum cleaner 100, according to the disclosure.

In an embodiment of the disclosure, the at least one processor 1800 of the body 1000 of the cordless vacuum cleaner 100 may identify the operating mode of the cordless vacuum cleaner 100. In an embodiment, the at least one processor 1800 may identify to which one of the jet mode, the super-power mode, the power mode, and the general mode the operating mode of the cordless vacuum cleaner 100 corresponds, for example. The at least one processor 1800 may identify power consumed by the suction motor 1110 in a current operating mode of the cordless vacuum cleaner 100. The at least one processor 1800 may identify the usage time in the current operating mode of the cordless vacuum cleaner 100.

In an embodiment of the disclosure, the at least one processor 1800 may control at least one of the fully-charged voltage or the final discharge voltage of the at least one battery 1500, based on the operating mode of the cordless vacuum cleaner 100. The fully-charged voltage may be a voltage when the at least one battery 1500 is fully charged. The final discharge voltage may be a voltage at a cut-off time when the at least one battery 1500 stops outputting power. The at least one processor 1800 may variously set the fully-charged voltage and the final discharge voltage of the at least one battery 1500 to increase the life and usage time of the at least one battery 1500.

In an embodiment of the disclosure, the at least one processor 1800 may decrease the fully-charged voltage and increase the final discharge voltage in the maximum output mode of the suction motor 1110. In an embodiment, the at least one processor 1800 may control the fully-charged voltage of the at least one battery 1500 to about 4.10 V and control the final discharge voltage to about 2.8 V, when the cordless vacuum cleaner 100 is in the jet mode, for example. In the jet mode that is the maximum output mode of the suction motor 1110, power supplied by the at least one battery 1500 to the suction motor 1110 may be the maximum so as to maximize output power of the suction motor 1110. The maximum output mode of the suction motor 1110 may directly affect the life of the at least one battery 1500. Accordingly, when the cordless vacuum cleaner 100 is in the jet mode, the at least one processor 1800 may control the fully-charged voltage and final discharge voltage of the at least one battery 1500 in consideration of life improvement of the at least one battery 1500.

In an embodiment of the disclosure, the at least one processor 1800 may increase the fully-charged voltage and decrease the final discharge voltage in an operating mode other than the maximum output mode of the suction motor 1110. The at least one processor 1800 may increase the fully-charged voltage and decrease the final discharge voltage when the output of the suction motor 1110 decreases. In an embodiment, the at least one processor 1800 may control the fully-charged voltage of the at least one battery 1500 to about 4.16 V and control the final discharge voltage to about 2.6 V, when the cordless vacuum cleaner 100 is in the super-power mode, for example. In an embodiment, the at least one processor 1800 may control the fully-charged voltage of the at least one battery 1500 to about 4.2 V and control the final discharge voltage to about 2.6 V, when the cordless vacuum cleaner 100 is in the power mode, for example. In an embodiment, the at least one processor 1800 may control the fully-charged voltage of the at least one battery 1500 to about 4.2 V and control the final discharge voltage to about 2.5 V, when the cordless vacuum cleaner 100 is in the general mode, for example. The cordless vacuum cleaner 100 may reduce an effect of the fully-charged voltage and final discharge voltage on the life of the at least one battery 1500, in the operating mode excluding the maximum output mode. Accordingly, the at least one processor 1800 may increase the fully-charged voltage and decrease the final discharge voltage to improve the usage time of the cordless vacuum cleaner 100, in the operating mode excluding the maximum output mode.

The cordless vacuum cleaner 100 in an embodiment of the disclosure may control at least one of the fully-charged voltage or final discharge voltage of the at least one battery 1500, according to whether the operating mode is the maximum output mode or another mode. At least one of the fully-charged voltage or final discharge voltage of the at least one battery 1500 may be variously controlled in consideration of both the life of the at least one battery 1500 and the usage time of the cordless vacuum cleaner 100.

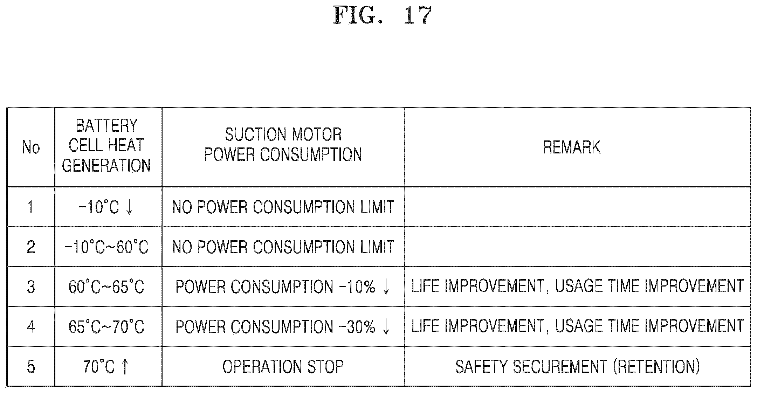

Hereinafter, a method of controlling the power consumption according to the temperature of the at least one battery 1500 will be described with reference to FIG. 17.

FIG. 17 is a table showing an embodiment of a result of controlling an output of the suction motor 1110 according to the temperature information of the battery 1500 of the cordless vacuum cleaner 100, according to the disclosure.

In an embodiment of the disclosure, the body 1000 of the cordless vacuum cleaner 100 may further include the temperature sensor 1547. The temperature sensor 1547 may obtain the temperature information of the at least one battery 1500. In an embodiment, the temperature sensor 1547 may be provided adjacent to the at least one battery 1500, for example.

In an embodiment of the disclosure, the at least one processor 1800 of the body 1000 of the cordless vacuum cleaner 100 may control the temperature sensor 1547 to obtain the temperature information of the at least one battery 1500. The at least one processor 1800 may control the power consumption of the suction motor 1110 according to a heat generation level of the at least one battery 1500.

In an embodiment of the disclosure, the at least one processor 1800 may gradually reduce the output of the suction motor 1110 when the temperature information of the at least one battery 1500 is equal to or greater than a first threshold temperature. In an embodiment, when the temperature of the at least one battery 1500 is equal to or greater than about 60 degrees Celsius (° C) and less than about 65 ° C, the power consumption may be reduced by about 10 %, for example. In an embodiment, when the temperature of the at least one battery 1500 is equal to or greater than about 65 ° C and less than about 70 ° C, the power consumption may be reduced by about 30 %, for example. The at least one processor 1800 may gradually reduce the output of the suction motor 1110, in consideration of the life of the at least one battery 1500 and the usage time of the at least one battery 1500, at the first threshold temperature or greater.

In an embodiment of the disclosure, the at least one processor 1800 may stop the operation of the suction motor 1110 when the temperature information of the at least one battery 1500 is equal to or greater than a second threshold temperature that is greater than the first threshold temperature. In an embodiment, when the temperature of the at least one battery 1500 is equal to or greater than about 70 ° C, the operation of the suction motor 1110 may be stopped. Excessive heat generation of the at least one battery 1500 may directly affect the life of the at least one battery 1500, for example. Accordingly, the at least one processor 1800 may immediately stop the operation of the suction motor 1110, first considering safety and the life of the at least one battery 1500, at the second threshold temperature or greater.

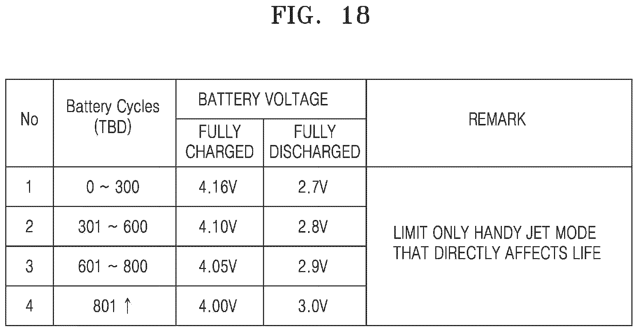

Hereinafter, a method of controlling the fully-charged voltage and final discharge voltage of the at least one battery 1500 according to a usage cycle of the at least one battery 1500 will be described with reference to FIG. 18.

FIG. 18 is a table showing an embodiment of a result of controlling at least one of the fully-charged voltage or the final discharge voltage of the battery 1500, according to the usage cycle of the cordless vacuum cleaner 100, according to the disclosure.

In an embodiment of the disclosure, the at least one processor 1800 of the body 1000 of the cordless vacuum cleaner 100 may obtain the usage cycle of the at least one battery 1500. The usage cycle may be the number of times the at least one battery 1500 has reached a fully-charged state and/or a fully-discharged state according to charging, using, and discharging of the at least one battery 1500. In an embodiment, the at least one processor 1800 may obtain the usage cycles of the at least one battery 1500 by dividing ranges of the usage cycles into a range of 300 times or less, a range between 301 times and 600 times, a range between 601 times and 800 times, and a range of 801 times or greater, for example.

In an embodiment of the disclosure, the at least one processor 1800 may decrease the fully-charged voltage of the at least one battery 1500 and increase the final discharge voltage of the at least one battery 1500, when the usage cycle of the at least one battery 1500 increases. The at least one processor 1800 may decrease the fully-charged voltage of the at least one battery 1500 and increase the final discharge voltage of the at least one battery 1500, when the usage cycle increases, considering the life of the at least one battery 1500. In an embodiment, the at least one processor 1800 may control the fully-charged voltage of the at least one battery 1500 to about 4.16 V, and control the final discharge voltage of the at least one battery 1500 to about 2.7 V, when the usage cycle is equal to or less than 300 times, for example. In an embodiment, the at least one processor 1800 may control the fully-charged voltage of the at least one battery 1500 to about 4.10 V, and control the final discharge voltage of the at least one battery 1500 to about 2.8 V, when the usage cycle is between 301 times and 600 times, for example. In an embodiment, the at least one processor 1800 may control the fully-charged voltage of the at least one battery 1500 to about 4.05 V, and control the final discharge voltage of the at least one battery 1500 to about 2.89 V, when the usage cycle is between 601 times and 800 times, for example. In an embodiment, the at least one processor 1800 may control the fully-charged voltage of the at least one battery 1500 to about 4.00 V, and control the final discharge voltage of the at least one battery 1500 to about 3.0 V, when the usage cycle is equal to or greater than 801 times, for example. Accordingly, the at least one processor 1800 may minimize or recover life reduction of the at least one battery 1500 according to the increase in the usage cycle.

In an embodiment of the disclosure, the at least one processor 1800 may decrease the fully-charged voltage of the at least one battery 1500 and increase the final discharge voltage of the at least one battery 1500, in consideration of the usage cycle when the cordless vacuum cleaner 100 is used in the maximum output mode. The life of the at least one battery 1500 may be greatly affected when the cordless vacuum cleaner 100 is used in the maximum output mode. Accordingly, the at least one processor 1800 may control the fully-charged voltage and the final discharge voltage to recover the life reduction of the at least one battery 1500, in consideration of only the usage cycle in the maximum output mode that greatly affects the life. In an embodiment, the at least one processor 1800 may decrease the fully-charged voltage of the at least one battery 1500 and increase the final discharge voltage of the at least one battery 1500, in consideration of only the usage cycle when the cordless vacuum cleaner 100 is used in the jet mode that has the highest output among handy situations of solely using the cordless vacuum cleaner 100, for example. The at least one processor 1800 may not consider the usage cycle in an operating mode that has a relatively low effect on the life of the at least one battery 1500. Accordingly, the at least one processor 1800 may prevent the usage time of the at least one battery 1500 from being unnecessarily reduced.

The cordless vacuum cleaner 100 in an embodiment of the disclosure may include the body 1000 and the station 200. The body 1000 in an embodiment of the disclosure may include the suction motor 1110 configured to rotate the fan to suck up dust, the at least one battery 1500 supplying power to the suction motor 1110, and the at least one processor 1800. The least one battery 1500 from among the different types of batteries may be detachably coupled to the body 1000 according to the disclosure. The at least one processor 1800 in an embodiment of the disclosure may identify a type of the at least one battery 1500. The at least one processor 1800 in an embodiment of the disclosure may control an output of the suction motor 1110, based on the type.

In an embodiment of the disclosure, the type of the at least one battery 1500 may include the large capacity battery and the small capacity battery. The at least one processor 1800 in an embodiment of the disclosure may identify whether the at least one battery 1500 is the large capacity battery or the small capacity battery, based on the type.

In an embodiment of the disclosure, the body 1000 may further include the communication interface 1650 for communicating with the at least one battery 1500. The at least one processor 1800 in an embodiment of the disclosure may control the communication interface 1650 to receive the type from the battery circuit 1540 of the at least one battery 1500.

In an embodiment of the disclosure, the at least one processor 1800 may control the communication interface 1650 to transmit a switch control signal for controlling the output, to the battery circuit 1540.

In an embodiment of the disclosure, the body 1000 may further include the battery coupling portion 1550 to which the at least one battery 1500 is coupled. The at least one processor 1800 in an embodiment of the disclosure may identify the type of the at least one battery 1500, based on whether the terminal accommodating portion 1560 of the at least one battery 1500 contacts the identifying terminal 1551 of the battery coupling portion 1550.

In an embodiment of the disclosure, the at least one processor 1800 may, when the at least one battery 1500 is the large capacity battery, control the output of the suction motor 1110 to be the first output. The at least one processor 1800 may, when the at least one battery 1500 is the small capacity battery, control the output of the suction motor 1110 to be the second output lower than the first output.

In an embodiment of the disclosure, the at least one processor 1800 may, when the at least one battery 1500 is in the normal mode, control the output of the suction motor 1110 to be the third output. The at least one processor 1800 may, when the at least one battery 1500 is in the overload mode, control the output of the suction motor 1110 to be the fourth output lower than the third output.

In an embodiment of the disclosure, the at least one processor 1800 may operate the suction motor 1110 in one of the first mode in which the output has a first strength and the second mode in which the output has a second strength lower than the first strength.

In an embodiment of the disclosure, the body 1000 may further include the temperature sensor 1547. The at least one processor 1800 may control the temperature sensor 1547 to obtain the temperature information of the at least one battery 1500. The at least one processor 1800 may gradually decrease the output of the suction motor 1110 when the temperature information is equal to or greater than the first threshold temperature and less than a second threshold temperature higher than the first threshold temperature . The at least one processor 1800 may stop the suction motor 1110 when the temperature information is equal to or greater than the second threshold temperature higher than the first threshold temperature.

In an embodiment of the disclosure, the at least one processor 1800 may stop the output in at least one operating mode, in the protection mode of the at least one battery 1500.

In an embodiment of the disclosure, the at least one processor 1800 may control at least one of the fully-charged voltage of the at least one battery 1500 or the final discharge voltage of the at least one battery 1500, based on the type and state information of the at least one battery 1500.

In an embodiment of the disclosure, the at least one processor 1800 may transmit, to the battery circuit 1540 included in the at least one battery 1500, a switch control signal for controlling at least one of the fully-charged voltage or the final discharge voltage.

In an embodiment of the disclosure, the at least one processor 1800 may operate the suction motor 1110 in one of the first mode in which the suction power has the first strength and the second mode in which the suction power has the second strength lower than the first strength. The at least one processor 1800 may perform at least one of the first control for increasing the fully-charged voltage or the second control for decreasing the final discharge voltage, in the second mode in comparison with the first mode.

In an embodiment of the disclosure, the at least one processor 1800 may perform at least one of the third control for decreasing the fully-charged voltage or the fourth control for increasing the final discharge voltage, according to an increase in the usage cycle of discharging the at least one battery 1500 in the maximum output mode.

A control method, according to the disclosure, for the cordless vacuum cleaner 100 including the suction motor 1110 configured to rotate the fan to suck up dust, and the at least one battery 1500 supplying power to the suction motor 1110, where the at least one battery 1500 from among the different types of batteries is detachably coupled to the cordless vacuum cleaner 100, includes identifying the type of the at least one battery 1500 of the cordless vacuum cleaner 100. The control method in an embodiment of the disclosure may include controlling the output of the suction motor 1110 of the cordless vacuum cleaner 100, based on the type.

In an embodiment of the disclosure, the identifying of the type of the at least one battery 1500 may include identifying whether the at least one battery 1500 is the large capacity battery or the small capacity battery, based on the type.

In an embodiment of the disclosure, the identifying of the type of the at least one battery 1500 may include controlling the communication interface 1650 of the cordless vacuum cleaner 100 to receive the type from the battery circuit 1540 of the at least one battery 1500.

In an embodiment of the disclosure, the identifying of the type of the at least one battery 1500 may include controlling the communication interface 1650 to transmit a switch control signal for controlling the output to the battery circuit 1540.

In an embodiment of the disclosure, the identifying of the type of the at least one battery 1500 may include identifying the type of the at least one battery 1500, based on whether the terminal accommodating portion 1560 of the at least one battery 1500 contacts the identifying terminal 1551 of the battery coupling portion 1550 of the cordless vacuum cleaner 100.

The control method in an embodiment of the disclosure may further include controlling at least one of the fully-charged voltage of the at least one battery 1500 or the final discharge voltage of the at least one battery 1500, based on the type and the state information of the at least one battery 1500.

A method in an embodiment of the disclosure may be recorded on a computer-readable recording medium by being implemented in the form of program commands executed by various computers. The computer-readable recording medium may include at least one of a program command, a data file, or a data structure, independently or collectively. The program commands recorded in the computer-readable recording medium may be specially designed for the disclosure or well known to one of ordinary skill in the computer software field. In embodiments, the computer-readable recording medium include magnetic media such as hard disks, floppy disks, and magnetic tapes, optical media such as CD-ROMs and DVDs, magneto-optical media such as floptical disks, and hardware devices specially configured to store and perform program commands, such as read-only memory (ROM), random-access memory (RAM), and flash memory. In embodiments, the computer command include machine codes generated by a compiler, and high-level language codes executable by a computer by an interpreter.

An embodiment of the disclosure may also be realized in the form of a recording medium including instructions executable by a computer, such as a program module executed by a computer. A computer-readable medium may be an arbitrary available medium accessible by a computer, and includes all volatile and non-volatile media and separable and non-separable media. Further, embodiments of the computer-readable recording medium may include a computer storage medium and a communication medium. In embodiments, the computer storage medium include all volatile and non-volatile media and separable and non-separable media, which have been implemented by an arbitrary method or technology, for storing information such as computer-readable instructions, data structures, program modules, and other data. The communication medium typically includes a computer-readable instruction, a data structure, a program module, other data of a modulated data signal, or another transmission mechanism, and an example thereof includes an arbitrary information transmission medium. In addition, an embodiment of the disclosure may be implemented as a computer program product or a computer program including computer-executable instructions, such as a computer-executable computer program.

A machine-readable storage medium may be provided in the form of a non-transitory storage medium. Here, the "non-transitory storage medium" only denotes a tangible device and does not contain a signal (e.g., electromagnetic waves). This term does not distinguish a case where data is stored in the storage medium semi-permanently and a case where the data is stored in the storage medium temporarily. In an embodiment, the "non-transitory storage medium" may include a buffer where data is temporarily stored, for example.

In an embodiment of the disclosure, a method in the above-described embodiments of the disclosure in the specification may be provided by being included in a computer program product. The computer program products are products that may be traded between sellers and buyers. The computer program product may be distributed in the form of machine-readable storage medium (e.g., a compact disc read-only memory (CD-ROM)), or distributed (e.g., downloaded or uploaded) through an application store or directly or online between two user devices (e.g., smart phones). In the case of online distribution, at least a part of the computer program product (e.g., a downloadable application) may be at least temporarily generated or temporarily stored in a machine-readable storage medium, such as a server of a manufacturer, a server of an application store, or a memory of a relay server.

## Claims

1. A cordless vacuum cleaner comprising:
a body;
a brush device configured to configured to suck up the air and foreign materials of the surface to be cleaned by being pressed against the surface to be cleaned; and
an extension pipe configured to connect the body and the brush device, wherein the brush device is rotatably combined with the extension pipe,
wherein the body comprising:
a suction motor configured to rotate a fan to suck up dust;
at least one battery which supplies power to the suction motor; and
a processor;
wherein the at least one battery from among different types of batteries is detachably connected to the body, and
wherein the processor is configured to:
identify a type of the at least one battery; and
control an output of the suction motor, based on the type.

2. The cordless vacuum cleaner of claim 1, wherein the type of the at least one battery comprises a large capacity battery and a small capacity battery, and
the processor is further configured to identify whether the at least one battery is the large capacity battery or the small capacity battery, based on the type.

3. The cordless vacuum cleaner of claim 1, wherein the body further comprises a communication interface configured to communicate with the at least one battery, and
the processor is further configured to control the communication interface and receive the type from a battery circuit of the at least one battery.

4. The cordless vacuum cleaner of claim 3, wherein the processor is further configured to control the communication interface and transmit a switch control signal which controls the output, to the battery circuit.

5. The cordless vacuum cleaner of claim 1, wherein the body further comprises a battery coupling portion to which the at least one battery is connected, and
the processor is further configured to identify the type of the at least one battery, based on whether a terminal accommodating portion of the at least one battery contacts an identifying terminal of the battery coupling portion.

6. The cordless vacuum cleaner of claim 2, wherein the processor is further configured to:
when the at least one battery is the large capacity battery, control the output of the suction motor to be a first output; and
when the at least one battery is the small capacity battery, control the output of the suction motor to be a second output lower than the first output.

7. The cordless vacuum cleaner of claim 1, wherein the processor is further configured to:
when the at least one battery is in a normal mode, control the output of the suction motor to be a third output; and
when the at least one battery is in an overload mode, control the output of the suction motor to be a fourth output lower than the third output.

8. The cordless vacuum cleaner of claim 1, wherein the processor is further configured to operate the suction motor in one of a first mode in which the output has a first strength and a second mode in which the output has a second strength lower than the first strength.

9. The cordless vacuum cleaner of claim 1, wherein the body further comprises a temperature sensor, and
the processor is further configured to:
obtain temperature information of the at least one battery from the temperature sensor;
gradually decrease the output of the suction motor when the temperature information is equal to or greater than a first threshold temperature and less than a second threshold temperature higher than the first threshold temperature; and
stop the suction motor when the temperature information is equal to or greater than the second threshold temperature.

10. The cordless vacuum cleaner of claim 1, wherein the processor is further configured to stop the output in operating mode, in a protection mode of the at least one battery.

11. The cordless vacuum cleaner of claim 1, wherein the processor is further configured to control at least one of a fully-charged voltage of the at least one battery or a final discharge voltage of the at least one battery, based on the type and state information of the at least one battery.

12. The cordless vacuum cleaner of claim 11, wherein the processor is further configured to transmit, to a battery circuit included in the at least one battery, a switch control signal for controlling at least one of the fully-charged voltage or the final discharge voltage.

13. The cordless vacuum cleaner of claim 11, wherein the processor is further configured to:
operate the suction motor in one of a first mode in which suction power has a first strength and a second mode in which the suction power has a second strength lower than the first strength; and
perform at least one of a first control for increasing the fully-charged voltage or a second control for decreasing the final discharge voltage, in the second mode in comparison with the first mode.

14. A cordless vacuum cleaner to which at least one battery is connectable, the cordless vacuum cleaner comprising:
a body comprising:
a suction motor configured to rotate a fan to suck up dust; and
a processor,
wherein the processor is configured to:
identify a type of the at least one battery among different types of batteries; and
control an output of the suction motor, based on the type.

15. A control method for a cordless vacuum cleaner comprising a suction motor configured to rotate a fan to suck up dust, and at least one battery which is detachably coupled to the cordless vacuum cleaner from among different types of batteries and supplies power to the suction motor, the control method comprising:
identifying a type of the at least one battery of the cordless vacuum cleaner; and
controlling an output of the suction motor of the cordless vacuum cleaner, based on the type.
